# EUROPÄISCHE PATENTSCHRIFT

(11) **EP 2 908 982 B1**
(45) Veröffentlichungstag und Bekanntmachung des Hinweises auf die Patenterteilung: **18.05.2016**
(21) Anmeldenummer: 15700188.4
(22) Anmeldetag: 07.01.2015
(51) Int. Cl.: B23Q 11/08, F16C 29/08

(54) **WERKZEUGMASCHINE MIT VERBESSERTER ABDECKUNG DER TRANSLATORISCHEN BEWEGUNGSFÜHRUNG**
MACHINE TOOL WITH AN IMPROVED COVERING FOR THE TRANSLATIONAL MOVEMENT GUIDE
MACHINE-OUTIL PRÉSENTANT UN ÉLÉMENT DE RECOUVREMENT AMÉLIORÉ POUR LE GUIDAGE EN TRANSLATION

(30) Priorität: 07.01.2014 DE 102014200064
(43) Veröffentlichungstag der Anmeldung: 26.08.2015
(73) Patentinhaber: Spinner Werkzeugmaschinenfabrik GmbH, 82054 Sauerlach (DE)
(72) Erfinder: SPINNER, Ulrich, 82054 Sauerlach (DE)
(74) Vertreter: RLTG
(86) Internationale Anmeldenummer: PCT/EP2015/050132
(87) Internationale Veröffentlichungsnummer: WO 2015/104274

(56) Entgegenhaltungen:
- EP-A2- 1 050 367
- DE-A1- 10 051 435
- US-A1- 2003 161 555

## Beschreibung

Die vorliegende Anmeldung betrifft eine Werkzeugmaschine gemäß dem Oberbegriff von Anspruch 1.

Eine gattungsgemäße Werkzeugmaschine ist aus der DE 100 51 455 A1 bekannt. Eine weitere gattungsgemäße Werkzeugmaschine ist aus den Figuren 2 und 3 der US 2003/0161555 A1 bekannt. Nachfolgend wird überdies der technische Hintergrund der vorliegenden Erfindung erläutert:
Werkzeugmaschinen sind allgemein bekannt, beispielsweise als spanende Werkzeugmaschinen, etwa in Form von Universal-Bohr- oder/und Fräsmaschinen. Derartige Werkzeugmaschinen haben üblicherweise mehrere Bewegungseinrichtungen mit in voneinander linear unabhängigen Richtungen verlaufenden translatorischen Bewegungsachsen, von denen üblicherweise längs einer ein Bearbeitungswerkzeug und längs der übrigen das zu bearbeitende Werkstück translatorisch bewegbar ist. Die Werkzeugmaschinen können darüber hinaus auch über rotatorische Bewegungseinrichtungen mit rotatorischen Bewegungsachsen verfügen, die üblicherweise ebenfalls der Bewegung des Werkstücks dienen.

Gerade die Bewegungseinrichtungen mit horizontalen - oder allgemeiner nichtvertikalen - translatorischen Bewegungsachsen sind an Werkzeugmaschinen einer erhöhten Schmutzbelastung ausgesetzt, da Späne oder/und Kühlmittel oder/und Schmiermittel von der Bearbeitungsstelle schwerkraftgetrieben auf diese auftreffen können.

Um zu vermeiden, dass Schmutz aus dem Bereich der Bearbeitungsstelle auf die Linearführungseinrichtung gelangt und diese im weiteren Betrieb beschädigt, sind die Linearführungseinrichtung und der Bewegungsantrieb einer translatorischen Bewegungseinrichtung üblicherweise mit einer Abdeckung bedeckt. Üblicherweise ist eine solche Abdeckung im Stand der Technik in Form eines teleskopartig längenveränderlichen Gliederkastens ausgebildet. Dies bedeutet, die Abdeckung ist in Richtung der jeweiligen Bewegungsachse segmentiert, wobei an einem dem Bewegungsteil der Bewegungsachse nächstgelegenen Längsende der Abdeckung ein Endsegment des Gliederkastens zur gemeinsamen axialen Bewegung mit dem Bewegungsteil verbunden ist, während üblicherweise am entgegengesetzten Längsende ein Endsegment relativ zur der die Bewegungsachse tragenden Basisstruktur unbeweglich an dieser festgelegt ist. Zwischen diesen Endsegmenten befinden sich weitere Zwischensegmente, welche zu den zuvor genannten und zueinander axial relativbeweglich sind. Dabei umgreift in der Regel in Richtung der Bewegungsachse vom Bewegungsteil weg ein dem Bewegungsteil näher gelegenes Segment das jeweils axial unmittelbar benachbarte bewegungsteilfernere Segment außen. Die dabei entstehenden Spalte zwischen axial unmittelbar benachbarten Segmenten sind durch an sich bekannte Dichtungsanordnungen gegen Schmutzeintritt abgedichtet.

Hieraus resultieren mehrere verbesserungsfähige Umstände:
Zum einen wird durch die beiden endseitigen mit Bewegungsteil einerseits und Basisstruktur andererseits fest verbundenen Gliedersegmente der bei vorgegebenen Abmessungen maximal mögliche axiale Bewegungsweg des Bewegungsteils an der translatorischen Bewegungseinrichtung eingeschränkt.

Zum anderen sind für jede Bewegungseinrichtung in der Regel zwei Abdeckungen notwendig, da üblicherweise eine Strecke von jedem axialen Längsende des Bewegungsteils zu dem diesem nächstgelegenen Längsende der Basisstruktur abgedeckt werden muss.

Die Einschränkung des axialen Bewegungswegs des Bewegungsteils lässt sich zwar durch Verkürzung der jeweils gewählten Segmentlänge in Grenzen halten. Jedoch kann dies nur bedingt gelingen, da bei feststehender Länge der abzudeckenden Bewegungsstrecke mit einer Verkürzung der Segmentlänge eine Erhöhung der Anzahl von Segmenten des abdeckenden Gliederkastens einhergeht. Da bei der Gliederkastenkonstruktion jedes Segment das axial benachbarte dem Bewegungsteil ferner liegende Segment übergreift, wird der so teleskopisch ausfahrbare und einziehbare Gliederkasten mit steigender Segmentanzahl in seinen Abmessungen orthogonal zur Bewegungsachse zunehmend bauraumfordernder, was ebenfalls unerwünscht ist. Zudem wird auch die Anzahl an benötigen Dichtungsstellen zwischen benachbarten Gliederkastensegmenten erhöht, was einen erhöhten Montageaufwand erfordert und für eine erhöhte Reibung beim Bewegen des Bewegungstells längs seiner translatorischen Bewegungsachse sorgt. Diese erhöhte Reibung muss durch entsprechende Dimensionierung des Bewegungsantriebs kompensiert werden.

Im Gegensatz zu den zuletzt beschriebenen Werkzeugmaschinen kann mit einer gattungsgemäßen Werkzeugmaschine, bei welcher die Abdeckung sich in Richtung der Bewegungsachse wenigstens über im Wesentlichen die gesamte Länge der Linearführungseinrichtung erstreckt und betriebsmäßig, insbesondere während eines bestimmungsgemäßen Bewegungsbetriebs des Bewegungsteils, relativ zur Basisstruktur unbeweglich an dieser festgelegt ist, erreicht werden, dass die Linearführungseinrichtung und der Bewegungsantrieb einer translatorischen Bewegungseinrichtung sicher vor den an Werkzeugmaschinen üblicherweise herrschenden äußeren Einflüssen geschützt werden können, wobei gleichzeitig eine Einschränkung des maximal möglichen axialen Bewegungswegs des Bewegungsteils möglichst vermieden und eine möglichst einfache, kompakte Bauweise der Bewegungseinrichtung erreicht wird.

Durch die bei gattungsgemäßen Werkzeugmaschinen bekannte Abdeckung kann eine teleskopartig ausziehbare und einschiebbare Abdeckung wie bei den bekannten Gliederkasten-Abdeckungen entfallen. Mit dieser können auch Synchronisationgsgetriebe entfallen, welche während eines Bewegungsbetriebs der Bewegungseinrichtung die Relativbewegung von Gliederkastensegmenten relativ zueinander bestimmen. Bei unsynchronisierten Gliederkästen treten während der Bewegung des Bewegungsteils Störkräfte durch stoßartige Mitnahme von Gliederkastensegmenten auf. Diese Störkräfte können durch die erfindungsgemäße Abdeckung ebenfalls vermieden werden. Aufgrund der einfacheren Bauweise von Bewegungseinrichtungen mit Abdeckungen gemäß der vorliegenden Erfindung mit geringeren bewegten Massen können bei sonst gleicher Bauweise höhere Beschleunigungen und höhere Geschwindigkeiten der Bewegungsteile erreicht werden, verglichen mit Bewegungseinrichtung mit Gliederkastenabdeckungen.

Durch die verhältnismäßig großen Fertigungstoleranzen der Gliederkastensegmente treten bei einer Bewegung des Bewegungsteils längs der Bewegungsachse an Werkzeugmaschinen des Standes der Technik unterschiedlich hohe der Bewegung entgegenwirkende Kräfte zwischen den Gliederkastensegmenten auf, die aufgrund der Verbindung der Gliederkastenabdeckung mit dem Bewegungsteil unmittelbar auf letzeres rückwirken. Auch dieser Effekt wird bei einer gattungsgemäßen Werkzeugmaschine vermieden. Dadurch sind mit der gattungsgemäßen Werkzeugmaschine höhere Positionier- und Bearbeitungsgenauigkeiten erzielbar.

Es ist Aufgabe der vorliegenden Erfindung, eine gattungsgemäße Werkzeugmaschine derart weiterzubilden, dass eine Durchbiegung der Abdeckung um eine horizontale zur Bewegungsachse orthogonale Biegeachse vermieden wird.

Gemäß der vorliegenden Erfindung wird diese Aufgabe gelöst durch eine Werkzeugmaschine mit den Merkmalen des Anspruchs 1. Dabei ist erfindungsgemäß daran gedacht, die Abdeckung auf ihrer zur Basisstruktur hin weisenden Innenseite an einem Abschnitt des Bewegungsteils abzustützen. Bevorzugt kann die Abdeckung an dem oben genannten Führungsteil des Bewegungsteils abgestützt sein, das von der Abdeckung bedeckt ist. Hierzu kann das Führungsteil oder allgemein der die Abdeckung abstützende Bewegungsteilabschnitt mit an der Innenseite der Abdeckung gleitend anliegenden oder/und abwälzend anliegenden Stützmitteln versehen sein. Beispielsweise kann an dem abstützenden Bewegungsteilabschnitt ein gleitend an der Innenseite der Abdeckung anliegendes Stützteil aus selbstschmierendem Kunststoff, etwa Polytetrafluorethylen, oder aus einem Kunststoff mit Graphitanteil, vorgesehen sein. Alternativ oder zusätzlich können die Stützmittel des Bewegungsteils wenigstens einen Stützwälzkörper, etwa ein Stützrad, vorzugsweise eine Mehrzahl von Stützwälzkörpern, wie etwa Stützräder oder Stützwalzen, umfassen, die bei einer axialen Bewegung des Bewegungsteils auf der Innenseite der Abdeckung abrollen.

Vorzugsweise ist eine Mehrzahl von Stützwälzkörpern zu einer Stützanordnung mit zur Bewegungsachse orthogonalen Wälzachsen zusammengefasst, die vorzugsweise in einer zur Bewegungsachse orthogonalen gemeinsamen Ebene angeordnet sind. Eine derartige Stützanordnung kann auf axial geringem Raum mit großer Stützwirkung ausgebildet sein. Bevorzugt ist an jedem Längsende des stützenden Bewegungsteilabschnitts, insbesondere des Führungsteils, je ein Stützmittel der oben genannten Art vorgesehen.

Die Abdeckung der erfindungsgemäßen Werkzeugmaschine ist im Wesentlichen über die gesamte Länge der Linearführungseinrichtung hinweg, bevorzugt auch axial darüber hinaus, durchgängig relativ zur Basisstruktur unbeweglich. Somit kann die Linearführungseinrichtung der Bewegungseinrichtung durch eine einzige Abdeckung bedeckt und vor äußeren Einflüssen geschützt sein. Dies führt zu einer vorteilhaften in der Anzahl benötigter Bauteile reduzierten und weniger fehleranfälligen Konstruktion. Die Abdeckung und das Bewegungsteil belegen somit in der Regel unabhängig von der axialen Relativposition des Bewegungsteils an der Basisstruktur stets einen gemeinsamen Axialabschnitt der Bewegungseinrichtung. Daher ist es nicht mehr nötig, einen Teil der Abdeckung, wie bei den Gliederkasten-Abdeckungen, zur gemeinsamen Bewegung mit dem Bewegungsteil zu verbinden. Bei Gliederkasten-Abdeckungen ist dagegen dort, wo sich das Bewegungsteil befindet, keine Abdeckung und dort, wo sich die Abdeckung befindet, kein Bewegungsteil vorhanden.

Wenn in der vorliegenden Anmeldung bei der Beschreibung einer Bewegungseinrichtung von einer axialen Richtung die Rede ist, so ist dies stets die Richtung der Bewegungsachse der beschriebenen Bewegungseinrichtung, also im Falle der weiter unten diskutierten Verfahreinrichtung die Richtung der Verfahrachse, im Falle der weiter unten diskutierten Verlagerungseinrichtung die Richtung der Verlagerungsachse und im Falle der ebenfalls weiter unten diskutierten Vertikalverstelleinrichtung die Richtung der Vertikalachse.

Die Abdeckung kann aufgrund ihrer relativen Unbeweglichkeit zur Basisstruktur selbst bei größeren axialen Längen der Abdeckung mit längs der Bewegungsachse im Wesentlichen einheitlicher Bauteildicke und Querschnittsgestalt und Querschnittsgröße ausgebildet sein. Eine Bauraumforderung orthogonal zur Bewegungsachse, wie dies beim Gliederkasten der Fall ist, ist an der Abdeckung der erfindungsgemäßen Werkzeugmaschine daher vermeidbar. Die Abdeckung der erfindungsgemäßen Werkzeugmaschine ist somit kompakter als jene des Standes der Technik und benötigt weniger Bauraum.

Durch den Wegfall von zahlreichen Dichtungsanordnungen zwischen nun nicht mehr vorhandenen Gliederkastensegmenten wird überdies der zum Aufbau der erfindungsgemäßen Werkzeugmaschine notwendige Montageaufwand verringert und werden die für den Bewegungsbetrieb des Bewegungsteils notwendigen Antriebskräfte verringert.

Durch den Wegfall von fest mit dem Bewegungsteil zur gemeinsamen Bewegung verbundenen Abdeckungssegmenten kann eine abdeckungsbedingte Einschränkung des axial maximal nutzbaren Bewegungswegs des Bewegungsteils an der Basisstruktur vollständig wegfallen.

Bei gleicher axialer Länge der Basisstruktur und sonst gleicher Ausstattung mit Linearführungseinrichtung und Bewegungsantrieb kann somit ein Bewegungsteil einer Werkzeugmaschine der vorliegenden Erfindung relativ zur Basisstruktur über einen größeren axialen Bereich verfahren werden, als dies bei Werkzeugmaschinen des Standes der Technik mit Basisstrukturen der Fall ist, bei welchem die Abdeckungen herkömmlich mit Gliederkästen abgedeckt sind.

Ebenso kann beispielsweise dann, wenn die Bewegungsachse in einer Richtung von einem Maschinenständer der Werkzeugmaschine zu einer vor dem Maschinenständer stehenden Bedienperson verläuft (das ist klassischerweise die Y-Achsenrichtung), die Basisstruktur zur Bereitstellung des gleichen Bewegungswegs wie bei Gliederkasten-Abdeckungen kürzer ausgebildet werden und somit die Verkürzung der Basisstruktur als zusätzliche Ständertiefe gewonnen werden, was die Gesamtstabilität und die Gesamtsteifigkeit der erfindungsgemäßen Werkzeugmaschine gegenüber dem Stand der Technik der Gliederkasten-Abdeckungen erhöht.

Somit kann bei sonst gleichen Abmessungen das Bewegungsteil näher zu einem Maschinenbediener hin bewegt werden als dies bei Gliederkasten-Abdeckungen der Fall ist. Dies erhöht die Ergonomie der erfindungsgemäßen Werkzeugmaschine, da nun Betriebsstellungen des Bewegungsteils anfahrbar sind, in denen Nutzflächen des Bewegungsteils für den Maschinenbediener leichter als bisher erreichbar sind.

Der Hinweis auf die betriebsmäßige Festlegung, insbesondere während eines bestimmungsgemäßen Bewegungsbetriebs, soll darlegen, dass die Abdeckung selbstverständlich zu Wartungs- und Reparaturzwecken von der Basisstruktur demontierbar sein kann. Zur Nutzung der von der erfindungsgemäßen Werkzeugmaschine bewirkten technischen Vorteile kommt es lediglich darauf an, wie die Abdeckung mit der Basisstruktur verbunden ist, wenn die Werkzeugmaschine zur bestimmungsgemäßen Werkstückbearbeitung ausgebildet und hergerichtet ist.

Da Schmutz bei der Werkstückbearbeitung, insbesondere bei der spanenden Werkstückbearbeitung, schwerkraftgetrieben zu Boden fällt, sind insbesondere translatorische Bewegungseinrichtungen mit horizontaler Bewegungsachse durch die erfindungsgemäße Ausbildung gut vor äußeren Einflüssen schützbar. Jedoch können mit der erfindungsgemäßen Ausbildung Bewegungseinrichtungen allgemein mit nichtausschließlich vertikaler Bewegungsachsenrichtung die von der vorliegenden Erfindung bewirkten technischen Vorteile besonders nutzen. Die Vorteile der vorliegenden Erfindung lassen sich umso stärker nutzen, je mehr die Bewegungsachse der abgedeckten Bewegungseinrichtung horizontal orientiert ist. Daher kommt die vorliegend diskutierte Abdeckung bevorzugt bereits bei Bewegungseinrichtungen mit überwiegend horizontaler Bewegungsachse zum Einsatz. Überwiegend horizontal ist eine Bewegungsachse dann, wenn ihre Verlaufkomponente pro axialer Längeneinheit in horizontaler Richtung größer ist als in vertikaler Richtung. Grundsätzlich kann die Abdeckung der erfindungsgemäßen Werkzeugmaschine jedoch auch an Vertikal-Bewegungseinrichtungen mit vertikaler Bewegungsachse zum Einsatz kommen.

Für die vorliegende Anmeldung soll eine translatorische Bewegungsachse im Zweifel dann als horizontal gelten, wenn sie parallel zu einer horizontalen Referenzebene eines Maschinenständers der Werkzeugmaschine verläuft, bezüglich der der Maschinenständer bei der Aufstellung der Werkzeugmaschine ausgerichtet wird. Ebenso kann im Zweifel eine translatorische Bewegungsachse als vertikal gelten, wenn sie orthogonal zu dieser Referenzebene des Maschinenständers verläuft.

Als Bewegungsantrieb kommt vorteilhafterweise ein kostengünstiger Spindelantrieb zum Einsatz. Es soll jedoch auch nicht die Verwendung eines Linearantriebs als Bewegungsantrieb ausgeschlossen sein, wenngleich dies verglichen mit dem Spindelantrieb zu deutlich höheren Herstellungskosten der Werkzeugmaschine führt.

Anders als bei Gliederkasten-Abdeckungen, wo sich das Bewegungsteil axial zwischen zwei Abdeckungen befindet und somit unmittelbar mit Führungswägen der Linearführungseinrichtung verbunden werden kann, ist bei der erfindungsgemäßen Werkzeugmaschine die Abdeckung wenigstens abschnittsweise zwischen einer Außenfläche des Bewegungsteils und der Linearführungseinrichtung angeordnet, sodass der Kraftfluss von von außen auf das Bewegungsteil einwirkenden Kräften, wie etwa Bearbeitungskräften, nicht auf direktem geradem Wege in die Linearführungseinrichtung eingeleitet werden kann. Hierzu kann vorgesehen sein, dass das Bewegungsteil unabhängig von seiner Position längs der Bewegungsachse die Abdeckung in Umfangsrichtung um die Bewegungsachse unter Bildung eines zur Bewegungsachse im Wesentlichen orthogonalen Aufnahmespalts zwischen Bewegungsteil und Abdeckung wenigstens an einem ihrer in Richtung der Bewegungsachse verlaufenden Längsrändern, vorzugsweise an beiden Längsrändern umgreift.

Aus Steifigkeitsgründen umgibt das Bewegungsteil die Abdeckung in Umfangsrichtung um die Bewegungsachse vorzugsweise vollständig.

Überraschend hat sich gezeigt, dass diese umgreifende bzw. umgebende Konstruktion nicht zu den eigentlich erwarteten Steifigkeitseinbußen führt. Durch Verrippung von einzelnen oder mehreren Bauteilen des Bewegungsteils kann eine durch die umgreifende bzw. umgebende Konstruktion befürchtete Steifigkeitseinbuße des Bewegungsteils größtenteils oder sogar vollständig kompensiert werden.

Das Bewegungsteil kann wenigstens folgende zwei gesondert voneinander ausgebildete und miteinander zu einem Bewegungsteil montierte gesondert ausgebildete Bauteile aufweisen: Ein überwiegend oder vorzugsweise vollständig unterhalb der Abdeckung, also zwischen Abdeckung und Basisstruktur, vorgesehenes Führungsteil und ein überwiegend oder vorzugsweise vollständig außerhalb der Abdeckung, also auf der vom Führungsteil abgewandten Seite der Abdeckung, vorgesehenes Nutzteil. Das Führungsteil kann mit dem Nutzteil durch wenigstens eine Verbindungsleiste, vorzugsweise durch zwei parallele Verbindungsleisten, verbunden sein. Bevorzugt umfasst das Bewegungsteil wenigstens zwei Verbindungsleisten, nämlich an jedem Querende wenigstens eine. Bevorzugt kann jede Verbindungsleiste als gesondertes Bauteil gesondert vom Führungsteil und Nutzteil ausgebildet sein.

Vorzugsweise ist das Führungsteil unmittelbar mit einem oder mehreren beweglichen Einheiten der Linearführungseinheit verbunden. Solche bewegliche Einheiten können wälzkörpergelagerte Führungswägen oder hydrostatisch gelagerte Führungseinheiten oder hydrodynamisch gelagerte Gleitführungsschlitten sein. Ebenso kann das Nutzteil zur Aufnahme des Werkzeugs oder bevorzugt des Werkstücks dienen. Die Verbindungsleisten verlaufen bevorzugt parallel zur Bewegungsachse der Bewegungseinrichtung. Sie können einem ebenfalls in Richtung der Bewegungsachse verlaufenden Längsrand der Abdeckung gegenüberliegen. Zur Verminderung der Anzahl an Bauteilen des Bewegungsteils kann die wenigstens eine Verbindungsleiste auch einstückig mit dem Führungsteil oder mit dem Nutzteil ausgebildet sein. Dies erfordert jedoch einen hohen Fertigungsaufwand. Es kann auch daran gedacht sein, die wenigstens eine Verbindungsleiste als zwei Teilverbindungsleisten auszubilden, von welchen die eine einstückig mit dem Nutzteil und die andere einstückig mit dem Führungsteil ausgebildet sein kann.

Um die Linearführungseinrichtung und den Bewegungsantrieb möglichst von mehreren Seiten gegen äußere Einflüsse schützen zu können, kann gemäß einer vorteilhaften Weiterbildung der vorliegenden Erfindung vorgesehen sein, dass die Abdeckung einen die Linearführungseinrichtung überspannenden Deckschenkelabschnitt und wenigstens einen von diesem in einer zur Bewegungsachse orthogonalen Verlaufsrichtung mit Verlaufskomponente zur Basisstruktur hin abstehenden Randschenkelabschnitt umfasst, wobei der Randschenkelabschnitt an seinem vom Deckschenkelabschnitt fernliegenden Ende einen sich in Richtung der Bewegungsachse erstreckenden freien Längsrand aufweist. Besonders bevorzugt umfasst die Abdeckung zwei in einer zur Bewegungsachse orthogonalen Verlaufsrichtung mit Verlaufskomponente zur Basisstruktur hin abstehende Randschenkelabschnitte mit bevorzugt je einem freien Längsrand, wobei dann der Deckschenkelabschnitt zwischen den Randschenkelabschnitten vorgesehen ist. Bevorzugt hat jeder Randschenkelabschnitt eine Verlaufsrichtung parallel zur Bewegungsachse und eine weitere Verlaufsrichtung zur Basisstruktur hin. Die Materialdickenrichtung ist zu beiden genannten Verlaufsrichtungen orthogonal.

Gemäß einer vorteilhaften Weiterbildung kann die Linearführungseinrichtung aus mehreren, insbesondere zwei, Teilführungseinrichtungen gebildet sein, von welchen jede eine Führungsschiene und wenigstens einen daran in Führungsschienenlängsrichtung geführten Führungswagen aufweisen kann. Die Linearführungsschienen der einzelnen Teilführungseinrichtungen sind zueinander parallel.

Bei Vorhandensein von mehreren, insbesondere zwei, Teilführungseinrichtungen befindet sich der Bewegungsantrieb bevorzugt zwischen zwei Teilführungseinrichtungen. Die Abdeckung, insbesondere der oben genannte Deckschenkelabschnitt, überdecken, wie oben bereits ausgeführt wurde, bevorzugt die Linearführungseinrichtung insgesamt, also eine Mehrzahl von Teilführungseinrichtungen, vorzugsweise alle die Linearführungseinrichtung bildenden Teilführungseinrichtungen.

Bei Bewegungseinrichtungen mit horizontaler Bewegungsachse ist die Verlaufskomponente zur Basisstruktur hin eine Verlaufskomponente in Schwerkraftwirkungsrichtung. Bei Bewegungseinrichtungen mit vertikaler Bewegungsachse ist die Verlaufskomponente zur Basisstruktur hin eine Verlaufskomponente orthogonal zur Schwerkraftwirkungsrichtung.

Die Verlaufskomponente zur Basisstruktur hin kann, muss aber nicht, die einzige Verlaufskomponente der Verlaufsrichtung orthogonal zur Bewegungsachse sein.

Besonders bevorzugt ist die Abdeckung bezüglich einer in Bewegungsachsenrichtung verlaufende Längsmittenebene der Bewegungseinrichtung spiegelsymmetrisch. Dies ermöglicht eine insgesamt möglichst symmetrische Bauform der Bewegungseinrichtung und somit auch eine möglichst symmetrische Krafteinleitung von dem Bewegungsteil in die Linearführungseinrichtung.

Zum weiteren Schutz der Linearführungseinrichtung und des Bewegungsantriebs vor äußeren Einflüssen kann an der Basisstruktur eine sich in Richtung der Bewegungsachse und in einer zur Bewegungsachse orthogonalen Erstreckungsrichtung mit einer Komponente zum Deckschenkelabschnitt hin erstreckende Schürzenanordnung vorgesehen sein. In einer Richtung orthogonal zur Bewegungsachse, vorzugsweise auch orthogonal zur Erstreckungsrichtung, kann dann die Schürzenanordnung einem Randschenkelabschnitt unmittelbar benachbart und mit einem zwischen dem Randschenkelabschnitt und der Schürzenanordnung gebildeten Spalt angeordnet sein.

Dieser Spalt erstreckt sich über im Wesentlichen die gesamte axiale Länge der Abdeckung. Der Spalt wird lokal von einem Abschnitt des Bewegungsteils, etwa von einem Abschnitt des Führungsteils, durchsetzt, wodurch es möglich ist, außerhalb der Abdeckung gelegene Abschnitte des Bewegungsteils, etwa des Nutzteils, mit der von der Abdeckung bedeckten Linearführungseinrichtung zu verbinden. Der Spalt bildet somit einen Verfahrspalt für das Bewegungsteil.

Um einen Schmutzeintritt durch den Spalt zur Linearführungseinrichtung und zum Bewegungsantrieb hin möglichst zu verhindern, überlappen sich vorzugsweise die Schürzenanordnung und der ihr unmittelbar benachbarte Randschenkelabschnitt in der genannten zur Bewegungsachse orthogonalen Erstreckungsrichtung. Dabei liegt vorzugsweise ein freier in Bewegungsachsenrichtung verlaufender Längsrand der Schürzenanordnung dem Deckschenkelabschnitt näher als ein freier Längsrand des der Schürzenanordnung unmittelbar benachbart angeordneten Randschenkelabschnitts. Auf diese Art und Weise kann an dem Spalt eine Art einfache Labyrinthdichtung realisiert sein.

Wie oben dargelegt wurde, ist eine Abdeckung mit zwei Randschenkelabschnitten und mit einem zwischen diesen angeordneten Deckschenkelabschnitt bevorzugt. In diesem Falle kann in Weiterbildung der erfindungsgemäßen Werkzeugmaschine daran gedacht sein, dass an der Basisstruktur einem jeden Randschenkelabschnitt in einer Richtung orthogonal zur Bewegungsachse unmittelbar benachbart je eine sich in Richtung der Bewegungsachse und in einer zur Bewegungsachse orthogonalen Erstreckungsrichtung mit einer Komponente zum Deckschenkelabschnitt hin erstreckende Schürzenanordnung vorgesehen ist, welche in einer Richtung orthogonal zur Bewegungsachse mit einem zwischen der Schürzenanordnung und dem dieser jeweils unmittelbar benachbarten Randschenkelabschnitt gebildeten Spalt angeordnet ist, wobei beide Spalte jeweils von einem Bewegungsteilabschnitt durchsetzt und durch den Deckschenkelabschnitt bedeckt sind, wobei sich jede Schürzenanordnung und der ihr unmittelbar benachbarte Randschenkelabschnitt in der zur Bewegungsachse orthogonalen Erstreckungsrichtung überlappen.

Dadurch, dass die in der Regel parallelen Spalte jeweils von einem Bewegungsteilabschnitt, etwa genauer einem Führungsteilabschnitt, durchsetzt sind, kann das Bewegungsteil mit noch größerer Steifigkeit ausgebildet werden.

Bevorzugt ist zur Gewichtseinsparung die Abmessung des Randschenkelabschnitts in Richtung der Bewegungsachse wesentlich größer, beispielsweise wenigstens um das Achtfache, bevorzugt wenigstens um das Zehnfache, höchst bevorzugt wenigstens um das 15-fache, als in einer zur Materialdickenrichtung des Randschenkelabschnitts und zur Bewegungsachse orthogonalen Breitenrichtung. Die Breitenrichtung ist die oben genannte Erstreckungsrichtung. Ebenso sind bevorzugt sind zur Gewichtseinsparung die Abmessungen des Randschenkelabschnitts in Breitenrichtung wesentlich größer, beispielsweise wenigstens um das Achtfache, bevorzugt wenigstens um das Zehnfache, höchst bevorzugt wenigstens um das 15-fache, als in der zur Breitenrichtung und zur Bewegungsachse orthogonalen Materialdickenrichtung des Randschenkelabschnitts. Für die Schürzenanordnung gelten die gleichen bevorzugten Abmessungsbeziehungen wie die oben für den Randschenkelabschnitt offenbarten.

Vorzugsweise sind eine Schürzenanordnung und der ihr unmittelbar benachbarte Randschenkelabschnitt zueinander parallel angeordnet. Dies erleichtert eine Abdichtung der zwischen Randschenkelabschnitt, Schürzenabschnitt und dem zwischen diesen verlaufenden Bewegungsteilabschnitt entstehenden Spalte erheblich.

Zur Festlegung der Abdeckung an der Basisstruktur kann vorgesehen sein, dass die Abdeckung nur an ihren axialen Längsendbereichen mit der Basisstruktur verbunden ist. In diesem Falle ist die Abdeckung über die zwischen den axialen Längsendbereichen gelegenen Bereiche schwebend an der Basisstruktur vorgesehen.

Insbesondere bei großem axialen Abstand zwischen den mit der Basisstruktur verbundenen axialen Längsendbereichen der Abdeckung können steifigkeitserhöhende Maßnahmen vorteilhaft sein, die dafür sorgen, dass die Abdeckung längs der Bewegungsachse stets im Wesentlichen die gleiche Gestalt und Lage bezüglich der Basisstruktur aufweisen kann. Hierzu kann konkret vorgesehen sein, dass der Deckschenkelabschnitt um eine zur Bewegungsachse parallele Krümmungsachse gekrümmt oder/und dass der Deckschenkelabschnitt um eine zur Bewegungsachse parallele Knickachse geknickt ist. Eine Krümmung derart, dass sie bei Betrachtung der Werkzeugmaschine von außen konvex ist bzw. eine Knickung des Deckschenkelabschnitts derart, dass er bei Betrachtung der Werkzeugmaschine von außen eine konvex ausgebildete Struktur aufweist, erhöht dabei zusätzlich die Wahrscheinlichkeit, dass auf den Deckschenkelabschnitt außen auftreffende Schmutzpartikel oder Schmier- bzw. Kühlmittel schwerkraftgetrieben von diesem zur Seite abfallen bzw. ablaufen.

Gemäß einer vorteilhaften Weiterbildung der Erfindung kann vorgesehen sein, dass wenigstens ein Bauteil, welches über die gesamte Länge der Abdeckung eine von der Linearführungseinrichtung wegweisende Außenseite der Abdeckung bildet, vorzugsweise die Abdeckung insgesamt, einstückig ausgebildet ist.

Die hier vorgeschlagene erfindungsgemäße Werkzeugmaschine ermöglicht, die Abdeckung gemäß einer vorteilhaften Weiterbildung der Erfindung insgesamt einstückig auszubilden oder ermöglicht wenigstens, ein die gesamte äußere Hülle der Abdeckung bildendes Hüllbauteil einstückig auszubilden. Damit kann eine über ihre gesamte axiale Länge fugenfreie und damit im Wesentlichen glatte äußere Hülle der Abdeckung erreicht werden. Dies schont auf der von der Basisstruktur wegweisenden Außenseite der Abdeckung in axialer Richtung bewegte, gleitend an der Abdeckung anliegende Dichtstrukturen und erhöht deren Lebensdauer. Entsprechendes gilt für eine fugenfreie Innenseite der Abdeckung und eine daraus resultierende Schonung der oben genannten Stützmittel.

Natürlich soll jedoch nicht ausgeschlossen sein, dass die Abdeckung gemäß einer Weiterbildung der Erfindung mehrteilig aus mehreren gesonderten Abdeckungsbauteilen unter Bildung eines Fügespalts zwischen zwei axial unmittelbar benachbarten Abdeckungsbauteilen gebildet ist. Vorzugsweise liegt der Fügespalt in einer zur Bewegungsachse orthogonalen Ebene. Auch hier kann eine Schonung von in axialer Richtung an der Außenhülle der Abdeckung gleitend anliegend beweglichen Dichtstrukturen erreicht werden, wenn zwischen einer von der Basisstruktur wegweisenden Außenseite der Abdeckung und dem Bewegungsteil unabhängig von der Position des Bewegungsteils längs der Bewegungsachse ein zur Bewegungsachse im Wesentlichen orthogonaler Aufnahmespalt gebildet ist, welcher durch zwei in Bewegungsachsenrichtung mit Abstand voneinander am Bewegungsteil angeordneten Dichtstrukturen, die gleitend an der Außenfläche der Abdeckung anliegen, überbrückt ist. Dabei ist der axiale Abstand der Dichtstrukturen vorzugsweise größer als der bestimmungsgemäße maximale axiale Bewegungsweg des Bewegungsteils relativ zur Basisstruktur, so dass selbst bei Ausnutzung des bestimmungsgemäßen maximalen axialen Bewegungswegs ein axialer Totbereich der Abdeckung besteht, der von keiner Dichtstruktur überfahren wird. Dann ist der wenigstens eine Fügespalt vorzugsweise in dem axialen Totbereich angeordnet. Das im unmittelbar vorhergehenden Absatz zur Anordnung eines Fügespalts auf der Außenseite der Abdeckung in Bezug auf zwei mit axialem Abstand angeordneten Dichtstrukturen Gesagte gilt mutatis mutandis entsprechend für die vorteilhafte Anordnung eines auf der Innenseite der Abdeckung gelegenen Fügespalts im Verhältnis zu den oben genannten bevorzugt mit axialem Abstand voneinander angeordneten Stützmitteln zur Abstützung der Abdeckung an einem Abschnitt des Bewegungsteils, insbesondere am Führungsteil.

Grundsätzlich kann das Bewegungsteil das Werkzeug oder ein Werkstück tragen. Beispielsweise kann das Bewegungsteil eine Werkzeugspindel tragen. Da jedoch häufig die Werkzeugspindel an einer Vertikalverstelleinrichtung mit vertikaler Verstellachse (üblicherweise als Z-Achse bezeichnet) vorgesehen ist, ist für die vorliegende Erfindung bevorzugt, dass das Bewegungsteil auf seiner von der Basisstruktur wegweisenden Nutzseite zur Aufnahme eines Werkstücks ausgebildet ist, beispielsweise eine Spannvorrichtung oder/und eine Mehrzahl von T-Nuten aufweist.

Werkzeugmaschinen verfügen zur möglichst umfassenden Bearbeitung eines Werkstücks in einer Aufspannung üblicherweise über mehr als eine translatorische Bewegungsachse. Deshalb ist es auch im vorliegenden Fall vorteilhaft, wenn die hier diskutierte Werkzeugmaschine als eine erste Bewegungseinrichtung eine translatorische Verfahreinrichtung zur Verlagerung von Werkzeug und Werkstück relativ zueinander längs einer Verfahrachse als einer ersten Bewegungsachse aufweist, wobei die Verfahreinrichtung eine Tragstruktur als eine erste Basisstruktur, ein längs der Verfahrachse relativ zur Tragstruktur bewegliches Verfahrteil als ein erstes Bewegungsteil, eine sich längs der Verfahrachse erstreckende und das Verfahrteil zur Verfahrbewegung führende erste Linearführungseinrichtung und einen das Verfahrteil zur Verfahrbewegung antreibenden Verfahrantrieb als einen ersten Bewegungsantrieb aufweist, wobei die erste Linearführungseinrichtung und der Verfahrantrieb zum Schutz vor äußeren Einflüssen durch eine vom Verfahrteil gesondert ausgebildete erste Abdeckung bedeckt sind, welche sich in Richtung der Verfahrachse wenigstens über im Wesentlichen die gesamte Länge der ersten Linearführungseinrichtung erstreckt und betriebsmäßig, insbesondere während eines bestimmungsgemäßen Verfahrbetriebs des Verfahrteils, relativ zur Tragstruktur unbeweglich an dieser festgelegt ist. Weiter kann die Werkzeugmaschine zusätzlich zur translatorischen Verfahreinrichtung als eine zweite Bewegungseinrichtung eine translatorische Verlagerungseinrichtung zur Verlagerung von Werkzeug und Werkstück relativ zueinander längs einer Verlagerungsachse als einer zweiten Bewegungsachse aufweisen, deren Richtung von jener der Verfahrachse verschieden ist, wobei die Verlagerungseinrichtung eine Stützstruktur als eine zweite Basisstruktur, ein längs der Verlagerungsachse relativ zur Stützstruktur bewegliches Verlagerungsteil als ein zweites Bewegungsteil, eine sich längs der Verlagerungsachse erstreckende und das Verlagerungsteil zur Verlagerungsbewegung führende zweite Linearführungseinrichtung und einen das Verlagerungsteil zur Verlagerungsbewegung antreibenden Verlagerungsantrieb als einen zweiten Bewegungsantrieb aufweist, wobei die zweite Linearführungseinrichtung und der Verlagerungsantrieb zum Schutz vor äußeren Einflüssen durch eine vom Verlagerungsteil gesondert ausgebildete zweite Abdeckung bedeckt sind, welche sich in Richtung der Verlagerungsachse wenigstens über im Wesentlichen die gesamte Länge der zweiten Linearführungseinrichtung erstreckt und betriebsmäßig, insbesondere während eines bestimmungsgemäßen Verlagerungsbetriebs des Verlagerungsteils, relativ zur Stützstruktur unbeweglich an dieser festgelegt ist.

Um eine möglichst kompakte raumsparende Bauweise der erfindungsgemäßen Werkzeugmaschine erreichen zu können, kann weiter vorgesehen sein, dass die Tragstruktur der Verfahreinrichtung Teil des Verlagerungsteils der Verlagerungseinrichtung ist. Somit kann die Verfahreinrichtung längs der Verlagerungsachse verlagerbar sein.

Bevorzugt bilden Verfahreinrichtung und Verlagerungseinrichtung zur bauraumsparenden Beweglichkeit des Verfahrteils in zwei voneinander linear unabhängigen, vorzugsweise nicht-vertikalen, besonders bevorzugt horizontalen Raumrichtungen eine Kreuztischeinrichtung mit vorzugsweise zueinander orthogonalen Bewegungsachsen.

Zur Bereitstellung einer erfindungsgemäßen Werkzeugmaschine mit möglichst hoher Steifigkeit ist bevorzugt, wenn die Stützstruktur Teil eines Maschinenständers der Werkzeugmaschine ist. Die Stützstruktur kann dabei ein an einen Maschinenständer anmontiertes gesondertes Bauteil sein, ist jedoch aus Gründen höherer Steifigkeit bevorzugt integraler Teil eines, vorzugsweise einstückigen, Maschinenständers der Werkzeugmaschine.

Als weitere Manipulationseinrichtung kann die Werkzeugmaschine eine translatorische Vertikalverstelleinrichtung als eine, gegebenenfalls weitere, Bewegungseinrichtung aufweisen zur Verstellung von Werkzeug und Werkstück relativ zueinander längs einer überwiegend vertikalen, besonders bevorzugt vertikalen, Vertikalachse als einer, gegebenenfalls weiteren, Bewegungsachse, wobei die Vertikalverstelleinrichtung eine Grundstruktur als eine, gegebenenfalls weitere, Basisstruktur, ein längs der Vertikalachse relativ zur Grundstruktur bewegliches Verstellteil als ein, gegebenenfalls weiteres, Bewegungsteil eine sich längs der Vertikalachse erstreckende und das Verstellteil zur Verstellbewegung führende Führungseinrichtung als eine, gegebenenfalls weitere, Linearführungseinrichtung und einen das Verstellteil zur Verstellbewegung antreibenden Verstellantrieb als einen, gegebenenfalls weiteren, Bewegungsantrieb aufweist, wobei die Führungseinrichtung und der Verstellantrieb zum Schutz vor äußeren Einflüssen durch eine vom Verstellteil gesondert ausgebildete Vertikalabdeckung als einer, gegebenenfalls weiteren, Abdeckung bedeckt sind.

Alternativ zur erfindungsgemäßen Ausbildung kann die Abdeckung der Vertikalbewegungseinrichtung auch als herkömmliche längenveränderliche Abdeckung ausgestaltet sein, welche einenends zur gemeinsamen Bewegung mit dem Verstellteil und andernends relativ zur Grundstruktur unbeweglich an dieser festgelegt ist, wie etwa Gliederkasten, Faltenbalg und dergleichen.

Die Abdeckung einer erfindungsgemäßen Werkzeugmaschine ist im Gegensatz zu Gliederkästen oder Faltenbalgen längenunveränderlich und weist im bestimmungsgemäßen Betrieb der Werkzeugmaschine stets die gleichen konstanten Abmessungen auf.

Vorzugsweise trägt das Verstellteil der Vertikalverstelleinrichtung eine Antriebsspindel zum Drehantrieb eines spanabhebenden Werkzeugs. Dies muss jedoch nicht so sein.

Weiterhin kann die Werkzeugmaschine zusätzlich zu den oben genannten translatorischen Bewegungsachsen eine oder zwei rotatorische Bewegungsachsen aufweisen.

Es kann in Abweichung der obigen Beschreibung auch daran gedacht sein, dass zwei oder gar drei translatorische Bewegungseinrichtungen mit zueinander linear unabhängigen Bewegungsachsen eine Werkzeugaufnahme tragen, etwa eine Antriebsspindel, und dass eine Werkstückaufnahme ausschließlich von einer oder zwei rotatorischen Bewegungseinrichtungen mit vorzugsweise linear unabhängigen Rotationsachsen getragen ist.

Die vorliegende Erfindung wird nachfolgend anhand der beiliegenden Zeichnungen beschrieben werden. Es stellt dar:
- Fig. 1: eine perspektivische Darstellung einer Ausführungsform einer erfindungsgemäßen Werkzeugmaschine im Teilschnitt,
- Fig. 2: den mit II bezeichneten Bildausschnitt von Fig. 1,
- Fig. 3: eine Schnittansicht durch die Verfahreinrichtung der Werkzeugmaschine von Fig. 1 bei Betrachtung einer zur Verfahrachse orthogonalen Schnittebene,
- Fig. 4: den mit IV bezeichneten Detailausschnitt in Fig. 3 und
- Fig. 5: eine grobschematische Betrachtung des Verfahrwegs des Verfahrteils längs der Verfahrachse sowie des axialen Abstands der Dichtungsstrukturen des Verfahrteils zur Darstellung eines bei bestimmungsgemäßem Betrieb von Dichtstrukturen des Verfahrteils nicht überfahrenen Totbereichs der Abdeckung der Verfahreinrichtung.

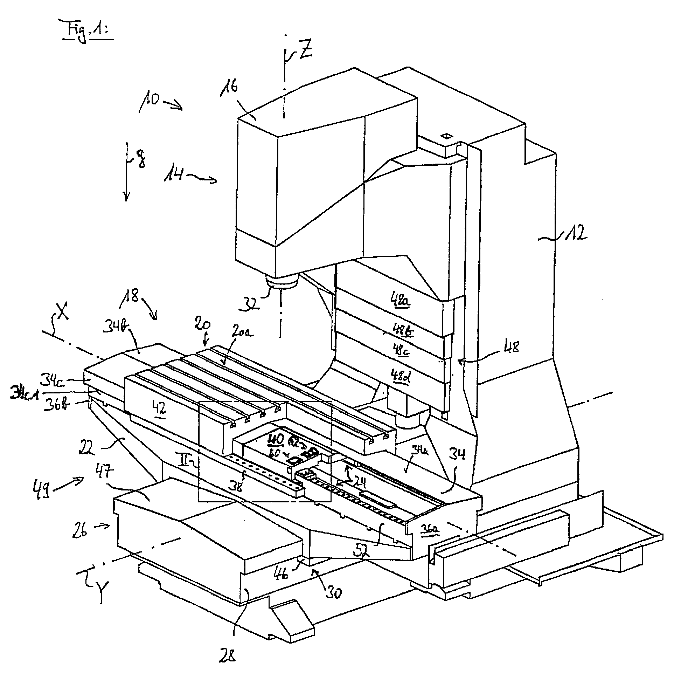

In Fig. 1 ist eine erfindungsgemäße Ausführungsform einer Werkzeugmaschine allgemein mit 10 bezeichnet. Als Werkzeugmaschine ist lediglich beispielhaft eine Universal-Bohr-Fräsmaschine mit drei translatorischen Achsen gewählt, nämlich einer horizontalen Verfahrachse X als einer ersten Bewegungsachse, einer horizontalen Verlagerungsachse Y als einer zweiten Bewegungsachse und einer Vertikalachse Z als einer weiteren Manipulationsachse.

Die Achsbezeichnungen sind entsprechend üblicher Bezeichnungskonventionen bei Werkzeugmaschinen vergeben.

Die Werkzeugmaschine 10 umfasst als Grundbauteil einen Maschinenständer 12, an welchem eine Vertikalverstelleinrichtung 14 mit einem Verstellteil 16 sowie eine translatorische Verfahreinrichtung 18 als eine erste Bewegungseinrichtung mit einem in Richtung der Bewegungsachse X verstellbaren Verfahrteil 20 als einem ersten Bewegungsteil, einer Tragstruktur 22 als einer ersten Basisstruktur, einer an der Tragstruktur vorgesehenen ersten Linearführungseinrichtung 24 und einem der Übersichtlichkeit halber nicht dargestellten Verfahrantrieb, etwa einem Spindeltrieb, als einem ersten Bewegungsantrieb vorgesehen sind. Weiter umfasst die Werkzeugmaschine 10 eine horizontale Verlagerungseinrichtung 26 als eine zweite Bewegungseinrichtung mit einer Stützstruktur 28 als einer zweiten Basisstruktur und einem relativ zur Stützstruktur 28 längs der Verlagerungsachse Y bewegbaren Verlagerungsteil 30 als einem zweiten Bewegungsteil.

Das Verfahrteil 20 ist relativ zur Tragstruktur 22 längs der Verfahrachse X verfahrbar.

Auch die Verlagerungseinrichtung 26 weist zum Antrieb des Verlagerungsteils 30 relativ zur Stützstruktur 28 einen nicht dargestellten Verlagerungsantrieb als einen zweiten Bewegungsantrieb auf. Dieser kann wie der Verfahrantrieb der Verfahreinrichtung 18 ein Spindeltrieb sein.

Die Vertikalverstelleinrichtung 14 trägt im dargestellten Beispiel eine Arbeitsspindel 32, welche ein Werkzeug mit einer oder mehreren Schneiden aufnehmen und in Rotation versetzen kann. Das Werkzeug kann beispielsweise ein Bohrer, ein Fräser oder ein Schleifwerkzeug sein.

Das nicht dargestellte zu bearbeitende Werkstück wird vorzugsweise auf der Nutzseite 20a des Verfahrteils 20 festgelegt, welches im dargestellten Beispiel zur Aufnahme und Festlegung des Werkstücks mit einer an sich bekannten T-Nuten-Struktur ausgebildet ist. An dieser T-Nuten-Struktur kann in an sich bekannter Weise eine nicht dargestellte Spannvorrichtung festgelegt werden, die wiederum das zu bearbeitende Werkstück spannt.

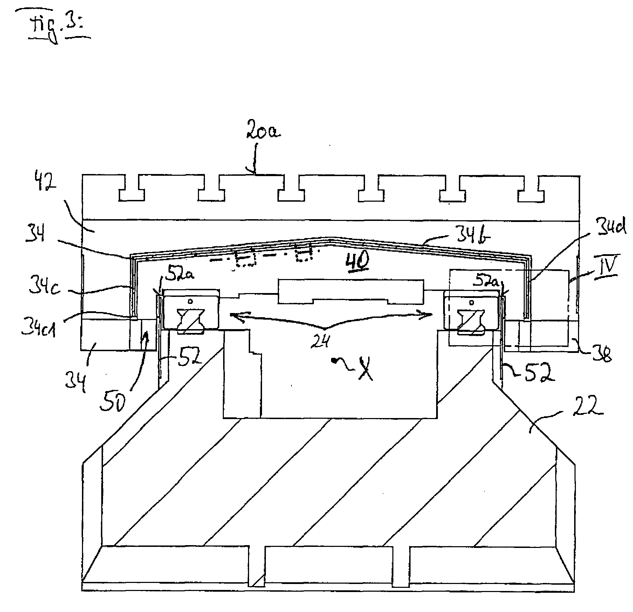

Zum Schutz der ersten Linearführungseinrichtung 24 sowie des Verfahrantriebs der Verfahreinrichtung 18 weist diese eine erste Abdeckung 34 auf, welche sich bevorzugt über die gesamte axiale Länge der Verfahreinrichtung 18 erstreckt und die erste Linearführungseinrichtung 24 sowie den Verfahrantrieb in axialer Richtung und quer dazu dachartig überspannt (siehe auch Fig. 3).

Vorzugsweise ist diese erste Abdeckung 34 einstückig ausgebildet, beispielsweise aus einem abgekanteten Blech, wobei die Knickachsen der Abkantung vorzugsweise parallel zur Verfahrachse X verlaufen. Durch die mehrfache Abkantung der ersten Abdeckung 34 um die genannten Knickachsen kann deren Biegesteifigkeit bezüglich einer schwerkraftinduzierten Biegung um eine zur Verlagerungsachse Y parallele Biegeachse erheblich erhöht werden.

Durch die bevorzugte einstückige Ausbildung der ersten Abdeckung 34, insbesondere durch die einstückige Ausbildung der von der Tragstruktur 22 wegweisenden Außenseite 34a der ersten Abdeckung 34 kann eine glatte, fugenfreie Oberfläche der Außenseite 34a der ersten Abdeckung 34 bereitgestellt werden.

Die erste Abdeckung 34 weist vorteilhafterweise einen die erste Linearführungseinrichtung 24 orthogonal zur Verfahrachse X, im vorliegenden Beispiel insbesondere parallel zur Verlagerungsachse Y überspannenden Deckschenkelabschnitt 34b und zwei von diesem an beiden Querenden zur Tragstruktur 22 hin, hier: in Schwerkraftwirkungsrichtung g, also parallel zur Vertikalachse Z, abstehende Randschenkelabschnitte 34c bzw. 34d auf (siehe auch Fig. 3). Der Deckschenkelabschnitt 34b ist, wie oben allgemein erwähnt ist, zur Erhöhung seiner Biegesteifigkeit um eine zur Verlagerungsachse Y parallele Biegeachse vorzugsweise wenigstens einfach um eine zur Verfahrachse X parallele Knickachse abgeknickt. Vorteilhafterweise ist die Knickrichtung des Deckschenkelabschnitts 34b so gewählt, dass sich bei Betrachtung der Werkzeugmaschine 10 von außen eine um die Verfahrachse X konvexe Struktur der ersten Abdeckung 34 ergibt. Dies erleichtert den schwerkraftbedingten Abtransport von Kühlmittel oder/und Schmiermittel, das auf den Deckschenkelabschnitt 34b etwa von der Bearbeitungsstelle des Werkstücks auftrifft. Entsprechendes gilt für auf den Deckschenkelabschnitt 34b auftreffende Bearbeitungsspäne.

Die Tragstruktur 22 weist an ihren beiden Längsenden je eine Abschlussplatte 36a bzw. 36b auf, an welchen die Längsenden der ersten Abdeckung 34, vorzugsweise ausschließlich, befestigt sind, etwa durch Verschraubung, bevorzugt mit in das Material der ersten Abdeckung 34 eingesenkten Schraubenköpfen. Ein Befestigungsabschnitt der Befestigungsplatten 36a und 36b ist in seiner Kontur der Innenkontur der ersten Abdeckung 34 folgend ausgebildet. Im dargestellten Beispiel haben die Befestigungsplatten 36a und 36b daher grob T-förmige Gestalt, damit der Befestigungsabschnitt der Befestigungsplatten 36a seitlich bis an die Randschenkelabschnitte 34c bzw. 34d der ersten Abdeckung 34 heranreichen kann. Ein unter dem Befestigungsabschnitt, d. h. im fertig montierten Zustand unter der ersten Abdeckung 34 vorgesehener Abschnitt der Befestigungsplatten 36a ist dagegen in Breitenrichtung der Tragstruktur 22 orthogonal zur Verfahrachse X vorzugsweise mit geringerer Breite ausgebildet, so dass er von den Längsenden von Verbindungsleisten 38 des Befestigungsteils 20 axial passiert werden kann. Dadurch kann der axiale Verfahrweg des Verfahrteils 20 relativ zur Tragstruktur 22 weiter erhöht werden.

Das Verfahrteil 20 ist vorteilhafterweise wenigstens dreiteilig, besonders bevorzugt wenigstens vierteilig, aufgebaut. Es umfasst im dargestellten Beispiel die zwei genannten Verbindungsleisten 38, welche ein von der ersten Abdeckung 34 abgedecktes und unmittelbar mit der ersten Linearführungseinrichtung 24 gekoppeltes Führungsteil 40 mit einem oberhalb und außerhalb der ersten Abdeckung 34 angeordneten Nutzteil 42 verbinden, das im dargestellten Beispiel der eigentlichen Aufnahme eines Werkstücks dient. Zwischen den genannten Bauteilen Führungsteil 40, Verbindungsleisten 38 und Nutzteil 42 ist ein Aufnahmespalt 44 gebildet, in welchem die erste Abdeckung 34 angeordnet ist und längs welchem ein Abschnitt der ersten Abdeckung 34 das Bewegungsteil 20 im dargestellten Beispiel axial durchsetzt.

Mit der hier beschriebenen ersten Abdeckung 34 ist es möglich, das Verfahrteil 20 axial so weit zu bewegen, bis das Führungsteil 40 an den längsendseitigen Befestigungsplatten 36a bzw. 36b anstößt. Es gibt daher bei vorgegebener Baulänge der Tragstruktur 22 keine durch eine herkömmliche Abdeckung, wie etwa einen Gliederkasten und dergleichen, hinzunehmende Einschränkung des axialen Verfahrwegs. Tatsächlich wird der axiale Verfahrweg des Verfahrteils 20 relativ zur Tragstruktur 22 im Wesentlichen durch die axiale Länge der Tragstruktur 22, insbesondere durch deren axiale lichte Weite zwischen den Befestigungsplatten 36a und 36b sowie durch die axiale Länge des Führungsteils 40 bestimmt.

Das Nutzteil 42 kann daher mit einem die Nutzseite 20a enthaltenden Abschnitt bevorzugt in einer oder in beiden axialen Endstellungen sogar über das der jeweiligen Endstellung zugeordnete Längsende der Tragstruktur 22 hinausreichend ausgebildet sein, so dass das Nutzteil 42 axial wenigstens zu einer oder vorzugsweise zu beiden axialen Seiten über das Führungsteil 40 hinaus ragt.

In der dargestellten Bauart umgreift das Verfahrteil 20 die erste Abdeckung 34 in Umfangsrichtung um die Verfahrachse X vollständig.

Im dargestellten Beispiel ist die erste Abdeckung 34 einstückig ausgebildet. Diese kann jedoch auch mehrstückig, beispielsweise zweistückig, ausgebildet sein.

Die erste Abdeckung 34 weist einen grobschematisch C-förmigen Querschnitt bei Betrachtung längs einer axialen Projektionsrichtung auf, wobei dieser Querschnitt aufgrund der vorzugsweise einstückigen Bauweise längs der Verfahrachse X im Wesentlichen unverändert bleibt.

Sofern ein Fügespalt zwischen zwei Abdeckungsbauteilen unvermeidlich ist, ist dieser bevorzugt so gestaltet, dass er in einer zur Verfahrachse X der Verfahreinrichtung 18 orthogonalen Ebene gelegen ist.

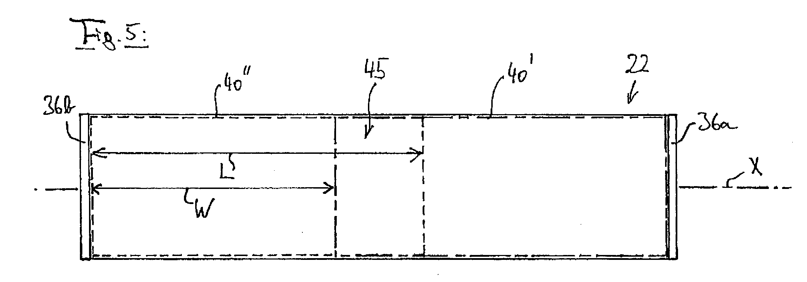

Zur Diskussion einer möglichst vorteilhaften Anordnung des Fügespalts in der ersten Abdeckung 34 sei nachfolgend auf die skizzenhafte Fig. 5 verwiesen:
In Fig. 5 ist grobschematisch die Tragstruktur 22 mit dem Führungsteil 40 des Verfahrteils 20 mit Blickrichtung in Schwerkraftwirkungsrichtung g dargestellt. In seiner der Befestigungsplatte 36a nächstgelegenen axialen (rechten) Endstellung ist das Führungsteil strichliniert mit unterschiedlich langen Strichen als Bewegungsteil 40' dargestellt. In seiner entgegengesetzten axialen (linken) Endstellung, welche der Befestigungsplatte 36b der Tragstruktur 22 näher gelegen ist, ist das Führungsteil 40 strichliniert mit etwa gleich langen Strichen als Führungsteil 40" dargestellt.

Der Pfeil W zeigt somit den von dem Führungsteil 40 axial maximal zurücklegbaren Bereich und somit den axialen Verfahrbereich des Führungsteils 40 bzw. des Verfahrteils 20 an. Dies ist der Abstand zwischen den entgegengesetzten axialen Endpositionen ein und desselben Bauteilabschnitts des Bewegungsteils, hier also des Verfahrteils 20.

Der zuvor erwähnte Aufnahmespalt 44 ist wenigstens von der Seite des Nutzteils 42 her an beiden Längsenden des unmittelbar der ersten Abdeckung 34 gegenüberliegenden Nutzteilabschnitts bevorzugt mit einer Dichtstruktur, etwa einer Dichtlippe oder/und einem Abstreifer zur Abdeckung 34 hin, überbrückt, welche bei axialer Bewegung des Verfahrteils 20 axial gleitend auf der äußeren Oberfläche des Deckschenkelabschnitts 34b sowie der Randschenkelabschnitte 34c und 34d gleitet. Damit sichergestellt ist, dass der Gleitanlageeingriff der Dichtstrukturen bei allen bestimmungsgemäßen Betriebszuständen des Verfahrteils 20 erhalten bleibt, ist jede Dichtstruktur etwa im Bereich der den axialen Verfahrweg W des Verfahrteils 20 tatsächlich beschränkenden Längsenden des Führungsteils 40 angeordnet. Idealerweise entspricht der axiale Abstand der in den Figuren nicht dargestellten Dichtstrukturen, welche bevorzugt ebenfalls in einer zur Verfahrachse X orthogonalen Ebene angeordnet sind, etwa der axialen Länge des Führungswagens 40. Diese ist in Fig. 5 mit L bezeichnet. Wenn nun, wie im dargestellten Beispiel, die Länge L als axialer Abstand zwischen den Dichtstrukturen zur Abdichtung des Aufnahmespalts 44 größer als der maximal mögliche axiale Verfahrweg W gewählt ist, dann entsteht um die Längsmitte der Tragstruktur 22 herum ein axialer Totbereich 45, welcher zu keiner Zeit des bestimmungsgemäßen Betriebs der Werkzeugmaschine 10 von einer Dichtstruktur überfahren werden kann. Es ist daher bevorzugt, Fügespalte zwischen einzelnen Bauteilen der ersten Abdeckung 34, so diese vorhanden sind, im Totbereich 45 der ersten Abdeckung 34 anzuordnen, so dass ein Überfahren des Fügespalts durch eine Dichtstruktur und die damit verbundene erhebliche mechanische Mehrbelastung der Dichtstruktur vermieden wird.

Weiterhin können an der zur ersten Abdeckung 34 hin weisenden Oberfläche des Führungsteils 40 in den Figuren nicht dargestellte Stützmittel vorgesehen sein, welche zur Abstützung der ersten Abdeckung 34 in Schwerkraftwirkungsrichtung g gleitend oder/und abwälzend in Anlageeingriff mit der inneren Oberfläche der ersten Abdeckung 34 stehen. Damit auch diese Stützmittel einen möglicherweise im Totbereich 45 angeordneten Fügespalt bei bestimmungsgemäßem Gebrauch der Werkzeugmaschine 10 nicht überfahren, sind die Stützmittel vorzugsweise den zuvor diskutierten Dichtstrukturen in Spaltweitenrichtung des Aufnahmespalts 44 gegenüberliegend angeordnet. Mit anderen Worten: Der axiale Abstand zwischen derartigen Stützmitteln ist im Wesentlichen gleich dem axialen Abstand zwischen den Dichtstrukturen des Verfahrteils 20.

Bevorzugt ist die Tragstruktur 22 Teil des Verlagerungsteils 30, etwa als ein dem Nutzteil 42 des Verfahrteils 20 entsprechendes Bauteil des Verlagerungsteils 30. Die Verfahreinrichtung 18 und die Verlagerungseinrichtung 28 bilden somit eine Kreuztischeinrichtung 49.

Die Verlagerungseinrichtung 26, welche der Verlagerung des Verlagerungsteils 30, und damit bevorzugt der Tragstruktur 22, in einer zur Verfahrachse X orthogonalen horizontalen Verfahrachse Y dient, ist in analoger Weise zur oben beschriebenen Verfahreinrichtung 18 aufgebaut. Insbesondere ist das Verlagerungsteil 30 wiederum mit einem unter ihrer zweiten Abdeckung 47 gelegenen Führungsteil und mit das Führungsteil der Verlagerungseinrichtung 26 mit der Tragstruktur 22 verbindenden Verbindungsleisten 46 ausgebildet. Die Stützstruktur 28 der Verlagerungseinrichtung 26 ist vorzugsweise integraler Bestandteil des Maschinenständers 12.

Da die im vorliegenden Beispiel die Arbeitsspindel 32 tragende Vertikalverstelleinrichtung 16 bei Verwendung der zuvor diskutierten Abdeckung zu offenen Spalten führen kann, welche in Schwerkraftwirkungsrichtung und orthogonal dazu offen sind, ist für die Basisstruktur der Vertikalverstelleinrichtung 14, das ist im vorliegenden Fall der Maschinenständer 12, eine herkömmliche Abdeckung in Form eines Gliederkastens 48 gewählt. Da der Gliederkasten 48 teleskopierbar längenveränderlich ist und relativ zueinander bewegliche Gliedersegmente 48a bis 48d aufweist, kann an der Vertikalverstelleinrichtung 14 ein Spalt zwischen Abdeckung 48 und Maschinenständer 12 bzw. allgemein Basisstruktur vermieden werden. Es soll jedoch nicht ausgeschlossen sein, dass auch an der Vertikalverstelleinrichtung Z eine Abdeckung montiert ist, wie sie zuvor für die Verfahreinrichtung 18 und die Verlagerungseinrichtung 26 diskutiert ist.

An dem Gliederkasten 48 der Vertikalverstelleinrichtung 16 erkennt man die bewegungswegsbegrenzende Wirkung des Gliederkastens 48. Das dem Verstellteil 16 axial nächstgelegene Gliedersegment 48a ist zur gemeinsamen Bewegung mit diesem fest verbunden. Ebenso ist das dem Verstellteil 16 am weitesten entfernt gelegene Gliedersegment 48d fest mit dem Maschinenständer 12 relativ zu diesem unbeweglich verbunden. Daher kann das Verstellteil 16 in Schwerkraftwirkungsrichtung g längs der Vertikalachse Z nicht weiter abgesenkt werden als bis entweder das verstellteilfernere Längsende des Gliedersegments 48a am verstellteilferneren Längsende des maschinenständerfesten Gliedersegments 48d oder das verstellteilnähere Längsende des maschinenständerfesten Gliedersegments 48d am verstellteilnäheren Längsende des Gliedersegments 48a angelangt ist.

Daher kann bei Anordnung einer zuvor diskutierten erfindungsgemäßen Abdeckung 34 oder/und 47 die axiale Länge des verstellteilfesten Gliedersegments 48a oder maschinenständerfesten Gliedersegments 48d als zusätzlicher axialer Verfahrweg gewonnen werden.

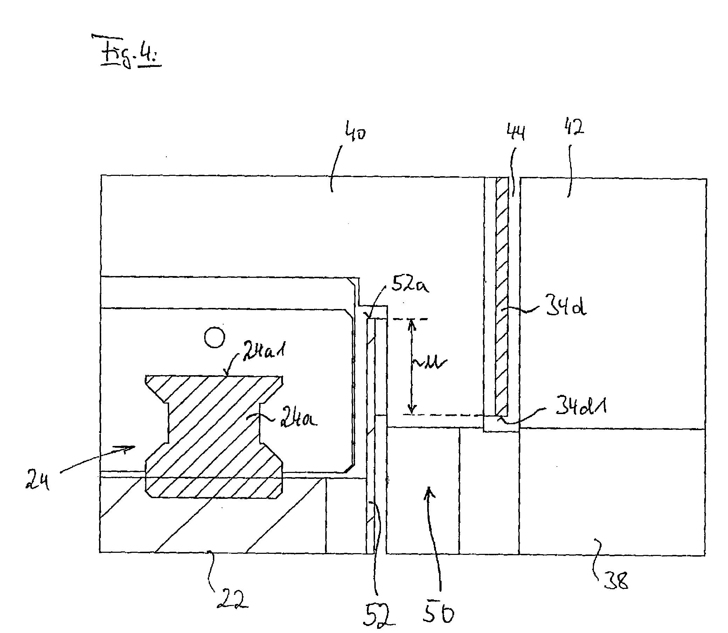

Um den an den Bewegungseinrichtungen 18 und 26 mit horizontaler Bewegungsachse X bzw. Y nach unten offenen Spalt 50, in welchem sich im dargestellten Beispiel ein Abschnitt des Führungsteils 40 axial bewegt, gegen Schmutzeintritt in den Innenraum der Tragstruktur 22 weiter abzudichten, ist bevorzugt zu beiden Seiten orthogonal zur Verfahrachse X je eine Schürzenanordnung 52 an der Tragstruktur 22 angeordnet. Die Schürzenanordnung 52 ist bevorzugt aus einem ebenen Material, etwa aus ebenem Stahlblech oder einem ebenen Kunststoffstreifen gebildet, der sich wie die Randschenkelabschnitte 34c und 34d der ersten Abdeckung 34 bevorzugt in zum Deckschenkelabschnitt 34b, d.i. hier Schwerkraftwirkungsrichtung g, und in Richtung der Verfahrachse X erstreckt. Dabei liegt jede Schürzenanordnung 52 einem anderen Randschenkel 34c bzw. 34d orthogonal zur Verfahrachse X unmittelbar gegenüber. Zur Vermeidung von Schmutzeintritt durch den so zwischen den Schürzenanordnungen 52 und den ihnen jeweils zugeordneten Randschenkelabschnitten 34c bzw. 34d gebildeten Spalten 50 ist vorgesehen, dass sich die Schürzenanordnungen 52 und jeweils zugeordnete Randschenkelabschnitte 34c bzw. 34d in Schwerkraftwirkungsrichtung g überlappen. In Fig. 4 ist ein Überlappungsbetrag mit u graphisch dargestellt. Dabei liegt der bevorzugt in Richtung der Verfahrachse X verlaufende freie Längsrand 52a einer Schürzenanordnung 52 entgegen der Schwerkraftwirkungsrichtung g von dem freien Längsrand 34c1 bzw. 34d1 des unmittelbar gegenüberliegenden Randschenkelabschnitts 34c bzw. 34d entfernt, also näher am Deckenschenkelabschnitt 34b als letzterer. Hierdurch kann eine Art Labyrinthdichtung gebildet werden, die Schmutzeintritt von außen ins Innere der Tragstruktur 22, oder auch ins Innere der Stützstruktur 28, verhindert. Vorzugsweise liegt der freie Längsrand 52a der Schürzenanordnung 52 entgegen der Schwerkraftwirkungsrichtung g auch mit Abstand von einer Oberfläche 24a1 von Linearführungsschienen 24a der ersten Linearführungseinrichtung 24 entfernt. Hierdurch kann das Risiko vermindert werden, dass Schmutz, welcher gegen die Schwerkraftwirkungsrichtung in den Spalt 50 von unten - etwa durch Abprallen von einer anderen Struktur - eintritt, auf der Lauffläche 24a1 der Führungsschiene 24a der ersten Linearführungseinrichtung 24 zu liegen kommt und die erste Linearführungseinrichtung 24 beschädigt oder ihre Standzeit verkürzt.

Vorzugsweise ist die Werkzeugmaschine 10 derart bemessen, dass ihre Tragstruktur 22 in deren axialer Länge oder die Stützstruktur 28 in deren axialer Länge einschließlich der Tiefenrichtung des Maschinenständers 12, d. h. von einer maschinenständerfernen Befestigungsplatte bis zur Rückseite des Maschinenständers 12 reichend, die maximale lichte Weite eines Frachtcontainers ausschöpft, so dass die hier dargestellte Werkzeugmaschine 10 in vorteilhafter Weise in herkömmlichen Standard-Frachtcontainern mit etwa 2,50 Metern lichter Breite verschifft werden kann, ohne dass das Einhalten des Frachtmaßes eine unerwünschte Verkürzung des axialen Bewegungswegs einer horizontalen Bewegungseinrichtung erfordert.

Zurückkehrend zu Figur 1 sind dort am Führungsteil 40 Stützmittel 60 bzw. 62 beispielhaft dargestellt.

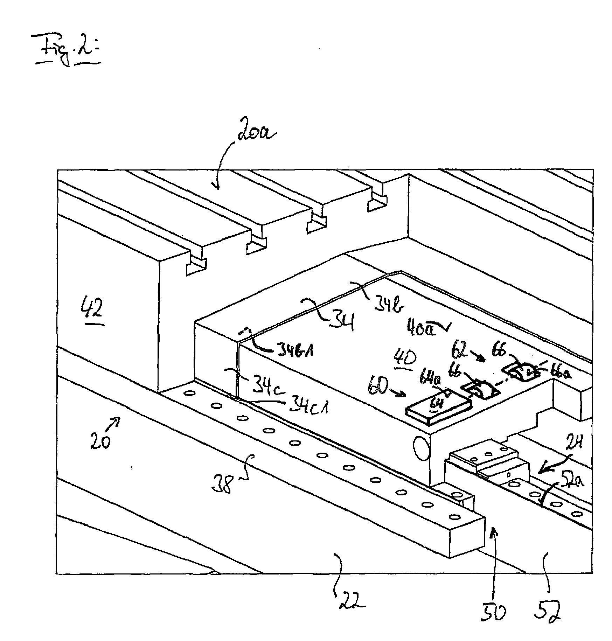

Die Stützmittel 60 und 62 sind in Figur 2 besser zu erkennen. Es können dabei am Führungsteil 40 nur die Stützmittel 60 oder nur die Stützmittel 62 oder, wie dargestellt, beide Stützmittel 60 und 62 gemeinsam vorgesehen sein. Die Stützmittel 60 oder/und 62 sind bevorzugt an jedem Längsende des Führungsteils 40 angeordnet.

Das Stützmittel 60 umfasst ein Stützteil 64, welches gleitend an der zum Führungsteil 40 hinweisenden Innenseite 34b1 des Deckschenkelabschnitts 34b der Abdeckung 34 anliegt. Hierzu kann das Stützteil 64 eine eigens vorgesehene Gleitanlagefläche 64a aufweisen, welche in Gleitanlage mit der Innenfläche 34b1 steht, um die Abdeckung 34 abzustützen, insbesondere in Schwerkraftwirkungsrichtung abzustützen. Der Gleitanlageeingriff zwischen dem Stützteil 64 und dem Deckschenkelabschnitt 34b besteht unabhängig von der Axialposition des Führungsteils 40.

Das Stützmittel 62 weist im Gegensatz zum Stützmittel 60 Stützwälzkörper 66 auf, welche mit einer Wälzfläche 66a, die eine zylindrische Mantelfläche sein kann, mit der Innenseite 34b1 des Deckschenkelabschnitts 34b der Abdeckung 34 in Wälzkontakt stehen. Auch die Stützwälzkörper 66 stehen unabhängig von der Axialposition des Führungsteils in Wälzkontakt mit der Innenseite 34b1 des Deckschenkelabschnitts 34b. Bei Axialbewegung des Führungsteils 40 wälzen die Stützwälzkörper 66 an der Innenseite 34b1 ab. Die Stützwälzkörper 66 können schlupffrei oder auch mit Schlupf abwälzen.

Die Stützwälzkörper 66 sind bezüglich ihrer Drehachsen vorzugsweise kollinear oder/und in einer gemeinsamen, zur Bewegungsachse X orthogonalen Ebene angeordnet, um möglichst wenig axialen (bezogen auf die Bewegungsachse X) Bauraum des Führungsteils (40) zur Aufnahme der Stützwälzkörper 66 zu benötigen.

Das Stützteil 64 kann aus selbstschmierendem Werkstoff sein, beispielsweise aus PTFE. Gleiches gilt für die Stützwälzkörper 66, die jedoch ebenso aus anderen Werkstoffen, wie etwa Elastomeren, Duroplasten, Metall oder aus einem harten, steifen Wälzkörperkern mit einer verglichen damit weicheren Wälzaußenlage ausgebildet sein können.

Vorzugsweise sind die Stützwälzkörper 66 in das Führungsteil 40 eingesenkt aufgenommen und ragen nur mit einem Teil ihres Körpers über eine Führungsteil-Außenfläche 40a zur Innenseite 34b1 des Deckschenkelabschnitts 34b vor.

Durch die Stützmittel 60 oder/und 62 kann die Abdeckung 34 auch zwischen ihren längsendseitigen Anbringungsstellen gegen Schwerkraftwirkung oder gegen die Wirkung von Bearbeitungskräften abgestützt sein, wodurch eine unerwünschte Durchbiegung der Abdeckung verhindert werden kann.

Da die Stützmittel 60 oder/und 62 bevorzugt an den Längsenden des Führungsteils 40 vorgesehen sind, wo sich auch die oben genannten Dichtungsstrukturen befinden, gelten die obigen Vorteile zur Lage von Fügespalten für die Stützmittel 60 und 62 ebenso.

## Patentansprüche

1. Werkzeugmaschine (10) zur, vorzugsweise spanenden, Bearbeitung eines Werkstücks durch ein Werkzeug mit wenigstens einer translatorischen Bewegungseinrichtung (18, 26) zur Verlagerung von Werkzeug und Werkstück relativ zueinander längs einer Bewegungsachse (X, Y), wobei die Bewegungseinrichtung (18, 26) eine Basisstruktur (22, 28), ein längs der Bewegungsachse (X, Y) relativ zur Basisstruktur (22, 28) bewegliches Bewegungsteil (20, 30), eine sich längs der Bewegungsachse (X, Y) erstreckende und das Bewegungsteil (20, 30) zur Bewegung führende Linearführungseinrichtung (24) und einen das Bewegungsteil (20, 30) zur Bewegung antreibenden Bewegungsantrieb aufweist, wobei die Linearführungseinrichtung (24) und der Bewegungsantrieb zum Schutz vor äußeren Einflüssen, wie etwa Späneanfall oder/und Schmiermitteloder/und Kühlmittelspritzern, durch eine vom Bewegungsteil (20, 30) gesondert ausgebildete Abdeckung (34, 47) bedeckt sind,
wobei die Abdeckung (34, 47) sich in Richtung der Bewegungsachse (X, Y) wenigstens über im Wesentlichen die gesamte Länge der Linearführungseinrichtung (24) erstreckt und betriebsmäßig, insbesondere während eines bestimmungsgemäßen Bewegungsbetriebs des Bewegungsteils (20, 30), relativ zur Basisstruktur (22, 28) unbeweglich an dieser festgelegt ist,
**dadurch gekennzeichnet, dass** eine zur Basisstruktur (22, 28) hinweisende Innenseite (34b1) der Abdeckung (34) an einem Abschnitt des Bewegungsteils (20, 30) abgestützt ist.

2. Werkzeugmaschine (10) nach Anspruch 1,
**dadurch gekennzeichnet, dass** das Bewegungsteil (20, 30) ein überwiegend, vorzugsweise vollständig, unterhalb der Abdeckung (34) vorgesehenes Führungsteil (40) aufweist, wobei die Abdeckung (34) an dem Führungsteil (40) des Bewegungsteils (20, 30) abgestützt ist.

3. Werkzeugmaschine (10) nach einem der Ansprüche 1 oder 2,
**dadurch gekennzeichnet, dass** ein die Abdeckung (34) abstützender Abschnitt des Bewegungsteils (20, 30), insbesondere das Führungsteil (40), mit an der Innenseite (34b1) der Abdeckung (34) gleitend anliegenden oder/und abwälzend anliegenden Stützmitteln (60, 62) versehen ist,
wobei insbesondere an dem die Abdeckung (34) abstützenden Abschnitt des Bewegungsteils (20, 30) ein gleitend an der Innenseite (34b1) der Abdeckung (34) anliegendes Stützteil (64) vorgesehen ist, welches insbesondere aus selbstschmierendem Kunststoff, wie etwa Polytetrafluorethylen, oder aus einem Kunststoff mit Graphitanteil gebildet ist.

4. Werkzeugmaschine (10) nach einem der Ansprüche 2 oder 3,
**dadurch gekennzeichnet, dass** die Stützmittel (60, 62) des Bewegungsteils (20, 30) wenigstens einen Stützwälzkörper (66), etwa ein Stützrad, vorzugsweise eine Mehrzahl von Stützwälzkörpern (66), wie etwa Stützräder oder Stützwalzen, umfassen, die bei einer axialen Bewegung des Bewegungsteils (20, 30) auf der Innenseite (34b1) der Abdeckung (34) abrollen,
wobei insbesondere eine Mehrzahl von Stützwälzkörpern (66) zu einer Stützanordnung (62) mit zur Bewegungsachse (X) orthogonalen Wälzachsen zusammengefasst ist, wobei die Wälzachsen der einzelnen Stützwälzkörper vorzugsweise in einer zur Bewegungsachse (X) orthogonalen gemeinsamen Ebene angeordnet sind.

5. Werkzeugmaschine (10) nach einem der Ansprüche 2 bis 4,
**dadurch gekennzeichnet, dass** an jedem Längsende des die Abdeckung (34) stützenden Abschnitts des Bewegungsteils (20, 30), insbesondere des Führungsteils (40), je ein Stützmittel (60, 62) vorgesehen ist.

6. Werkzeugmaschine nach einem der vorhergehenden Ansprüche,
**dadurch gekennzeichnet, dass** das Bewegungsteil (20, 30) unabhängig von seiner Position längs der Bewegungsachse (X, Y) die Abdeckung (34, 47) in Umfangsrichtung um die Bewegungsachse (X, Y) unter Bildung eines zur Bewegungsachse (X, Y) im Wesentlichen orthogonalen Aufnahmespalts (44) zwischen Bewegungsteil (20, 30) und Abdeckung (34, 47) wenigstens an einem ihrer in Richtung der Bewegungsachse (X, Y) verlaufenden Längsrändern (34c1, 34d1), vorzugsweise an beiden Längsrändern (34c1, 34d1) umgreift, vorzugsweise die Abdeckung (34, 47) vollständig umgibt.

7. Werkzeugmaschine (10) nach einem der vorhergehenden Ansprüche,
**dadurch gekennzeichnet, dass** die Abdeckung (34, 47) einen die Linearführungseinrichtung (24) überspannenden Deckschenkelabschnitt (34b) und wenigstens einen davon mit Verlaufskomponente zur Basisstruktur (22, 28) hin abstehenden Randschenkelabschnitt (34c, 34d) umfasst, wobei der Randschenkelabschnitt (34c, 34d) an seinem vom Deckschenkelabschnitt (34b) fernliegenden Ende einen sich in Richtung der Bewegungsachse (X, Y) erstreckenden freien Längsrand (34c1, 34d1) aufweist, wobei die Abdeckung (34, 47) besonders bevorzugt zwei mit Verlaufskomponente zur Basisstruktur (22, 28) hin abstehende Randschenkelabschnitte (34c, 34d) umfasst, wobei der Deckschenkelabschnitt (34b) zwischen den Randschenkelabschnitten (34c, 34d) vorgesehen ist,
wobei insbesondere an der Basisstruktur (22, 28) eine sich in Richtung der Bewegungsachse (X, Y) und mit einer Komponente zum Deckenschenkelabschnitt (34b) hin erstreckende Schürzenanordnung (52) vorgesehen ist, welche in einer Richtung orthogonal zur Bewegungsachse (X, Y) einem Randschenkelabschnitt (34c, 34d) unmittelbar benachbart und mit einem zwischen dem Randschenkelabschnitt (34c, 34d) und der Schürzenanordnung (52) gebildeten Spalt (50) angeordnet ist, welcher von einem Bewegungsteilabschnitt durchsetzt und durch den Deckschenkelabschnitt (34b) bedeckt ist, wobei sich die Schürzenanordnung (52) und der ihr unmittelbar benachbarte Randschenkelabschnitt (34c, 34d) in einer zur Bewegungsachse orthogonalen Richtung (u) überlappen,
wobei insbesondere die Abdeckung (34, 47) zwei Randschenkelabschnitte (34c, 34d) mit einem zwischen diesen angeordneten Deckschenkelabschnitt (34b) aufweist und dass an der Basisstruktur (22, 28) einem jeden Randschenkelabschnitt (34c, 34d) in einer Richtung orthogonal zur Bewegungsachse (X, Y) unmittelbar benachbart je eine sich in Richtung der Bewegungsachse (X, Y) und mit einer Komponente zum Deckenschenkelabschnitt (34b) hin erstreckende Schürzenanordnung (52) vorgesehen ist, welche in einer Richtung orthogonal zur Bewegungsachse (X, Y) mit einem zwischen der Schürzenanordnung (52) und dem dieser jeweils unmittelbar benachbarten Randschenkelabschnitt (34c, 34d) gebildeten Spalt (50) angeordnet ist, wobei beide Spalte (50) jeweils von einem Bewegungsteilabschnitt durchsetzt und durch den Deckschenkelabschnitt (34b) bedeckt sind, wobei sich jede Schürzenanordnung (52) und der ihr unmittelbar benachbarte Randschenkelabschnitt (34c, 34d) in einer zur Bewegungsachse orthogonalen Richtung (X, Y) überlappen.

8. Werkzeugmaschine (10) nach Anspruch 7,
**dadurch gekennzeichnet, dass** der Deckschenkelabschnitt (34b) um eine zur Bewegungsachse (X, Y) parallele Krümmungsachse gekrümmt, vorzugsweise bei Betrachtung der Werkzeugmaschine (10) von außen konvex gekrümmt ist, oder/und dass der Deckschenkelabschnitt (34b) um eine zur Bewegungsachse (X, Y) parallele Knickachse geknickt ist, vorzugsweise unter Bildung einer bei Betrachtung der Werkzeugmaschine (10) von außen konvex ausgebildeten Struktur.

9. Werkzeugmaschine (10) nach einem der vorhergehenden Ansprüche, **dadurch gekennzeichnet, dass** die Abdeckung (34, 47) nur an ihren axialen Längsendbereichen mit der Basisstruktur (22, 28) verbunden ist.

10. Werkzeugmaschine (10) nach einem der vorhergehenden Ansprüche,
**dadurch gekennzeichnet, dass** wenigstens ein Bauteil, welches über die gesamte Länge der Abdeckung (34, 47) eine von der Linearführungseinrichtung (24) wegweisende Außenseite (34a) der Abdeckung (34, 47) bildet, vorzugsweise die Abdeckung (34, 47) insgesamt, einstückig ausgebildet ist.

11. Werkzeugmaschine (10) nach einem der Ansprüche 1 bis 9,
**dadurch gekennzeichnet, dass** die Abdeckung (34, 47) mehrteilig aus mehreren gesonderten Abdeckungsbauteilen unter Bildung wenigstens eines, vorzugsweise in einer zur Bewegungsachse (X, Y) orthogonalen Ebene gelegenen, Fügespalts zwischen zwei benachbarten Abdeckungsbauteilen gebildet ist, wobei insbesondere zwischen einer von der Basisstruktur (22, 28) wegweisenden Außenseite (34a) der Abdeckung (34) und dem Bewegungsteil (20, 30) unabhängig von der Position des Bewegungsteils (20, 30) längs der Bewegungsachse (X, Y) ein zur Bewegungsachse (X, Y) im Wesentlichen orthogonaler Aufnahmespalt (44) gebildet ist, welcher durch zwei in Bewegungsachsenrichtung mit Abstand (L) von einander am Bewegungsteil (20, 30) angeordneten Dichtstrukturen, die gleitend an der Außenseite (34a) der Abdeckung (34, 47) anliegen, überbrückt ist, wobei bevorzugt der axiale Abstand (L) der Dichtstrukturen größer ist als der bestimmungsgemäße maximale axiale Bewegungsweg (W) des Bewegungsteils (20, 30) relativ zur Basisstruktur (22, 28), so dass selbst bei Ausnutzung des bestimmungsgemäßen maximalen axialen Bewegungswegs (W) ein axialer Totbereich (45) der Abdeckung (34, 47) besteht, der von keiner Dichtstruktur überfahrbar ist, wobei der wenigstens eine Fügespalt in dem axialen Totbereich (45) angeordnet ist.

12. Werkzeugmaschine (10) nach einem der vorhergehenden Ansprüche,
**dadurch gekennzeichnet, dass** das Bewegungsteil (20, 30) auf seiner von der Basisstruktur (22, 28) wegweisenden Nutzseite (20a) zur Aufnahme eines Werkstücks ausgebildet ist, beispielsweise eine Spannvorrichtung oder/und eine Mehrzahl von T-Nuten aufweist.

13. Werkzeugmaschine (10) nach einem der vorhergehenden Ansprüche,
**dadurch gekennzeichnet, dass** sie als eine erste Bewegungseinrichtung (18, 26) eine translatorische Verfahreinrichtung (18) zur Verlagerung von Werkzeug und Werkstück relativ zueinander längs einer Verfahrachse (X) als einer ersten Bewegungsachse (X, Y) aufweist, wobei die Verfahreinrichtung (18) eine Tragstruktur (22) als eine erste Basisstruktur (22, 28), ein längs der Verfahrachse (X) relativ zur Tragstruktur (22) bewegliches Verfahrteil (20) als ein erstes Bewegungsteil (20, 30), eine sich längs der Verfahrachse (X) erstreckende und das Verfahrteil (20) zur Verfahrbewegung führende erste Linearführungseinrichtung (24) und einen das Verfahrteil (20) zur Verfahrbewegung antreibenden Verfahrantrieb als einen ersten Bewegungsantrieb aufweist, wobei die erste Linearführungseinrichtung (24) und der Verfahrantrieb zum Schutz vor äußeren Einflüssen durch eine vom Verfahrteil (20) gesondert ausgebildete erste Abdeckung (34) bedeckt sind, welche sich in Richtung der Verfahrachse (X) wenigstens über im Wesentlichen die gesamte Länge der ersten Linearführungseinrichtung (24) erstreckt und betriebsmäßig, insbesondere während eines bestimmungsgemäßen Verfahrbetriebs des Verfahrteils (20), relativ zur Tragstruktur (22) unbeweglich an dieser festgelegt ist, und dass sie zusätzlich zur translatorischen Verfahreinrichtung (18) als eine zweite Bewegungseinrichtung (18, 26) eine translatorische Verlagerungseinrichtung (26) zur Verlagerung von Werkzeug und Werkstück relativ zueinander längs einer Verlagerungsachse (Y) als einer zweiten Bewegungsachse (X, Y) aufweist, deren Richtung von jener der Verfahrachse (X) verschieden ist, wobei die Verlagerungseinrichtung (26) eine Stützstruktur (28) als eine zweite Basisstruktur (22, 28), ein längs der Verlagerungsachse (Y) relativ zur Stützstruktur (28) bewegliches Verlagerungsteil (30) als ein zweites Bewegungsteil (20, 30), eine sich längs der Verlagerungsachse (Y) erstreckende und das Verlagerungsteil (30) zur Verlagerungsbewegung führende zweite Linearführungseinrichtung und einen das Verlagerungsteil (30) zur Verlagerungsbewegung antreibenden Verlagerungsantrieb als einen zweiten Bewegungsantrieb aufweist, wobei die zweite Linearführungseinrichtung und der Verlagerungsantrieb zum Schutz vor äußeren Einflüssen durch eine vom Verlagerungsteil (30) gesondert ausgebildete zweite Abdeckung (47) bedeckt sind, welche sich in Richtung der Verlagerungsachse (Y) wenigstens über im Wesentlichen die gesamte Länge der zweiten Linearführungseinrichtung erstreckt und betriebsmäßig, insbesondere während eines bestimmungsgemäßen Verlagerungsbetriebs des Verlagerungsteils (30), relativ zur Stützstruktur (28) unbeweglich an dieser festgelegt ist,
wobei insbesondere die Tragstruktur (22) der Verfahreinrichtung (18) Teil des Verlagerungsteils (30) der Verlagerungseinrichtung (26) ist, wobei Verfahreinrichtung (18) und Verlagerungseinrichtung (26) bevorzugt eine Kreuztischeinrichtung (49) bilden.

14. Werkzeugmaschine (10) nach einem der vorhergehenden Ansprüche,
**dadurch gekennzeichnet, dass** die Basisstruktur (22, 28), insbesondere die Stützstruktur (28), anmontierter oder integraler Teil eines Maschinenständers (12) der Werkzeugmaschine (10) ist.

15. Werkzeugmaschine (10) nach einem der vorhergehenden Ansprüche,
**dadurch gekennzeichnet, dass** sie eine translatorische Vertikalverstelleinrichtung (14) als eine, gegebenenfalls weitere, Bewegungseinrichtung aufweist zur Verstellung von Werkzeug und Werkstück relativ zueinander längs einer überwiegend vertikalen, besonders bevorzugt vertikalen, Vertikalachse (Z) als einer, gegebenenfalls weiteren, Bewegungsachse, wobei die Vertikalverstelleinrichtung (14) eine Grundstruktur (12) als eine, gegebenenfalls weitere, Basisstruktur, ein längs der Vertikalachse (Z) relativ zur Grundstruktur (12) bewegliches Verstellteil (16) als ein, gegebenenfalls weiteres, Bewegungsteil, eine sich längs der Vertikalachse (Z) erstreckende und das Verstellteil (16) zur Verstellbewegung führende Führungseinrichtung als eine, gegebenenfalls weitere, Linearführungseinrichtung und einen das Verstellteil (16) zur Verstellbewegung antreibenden Verstellantrieb als einen, gegebenenfalls weiteren, Bewegungsantrieb aufweist, wobei die Führungseinrichtung und der Verstellantrieb zum Schutz vor äußeren Einflüssen durch eine vom Verstellteil (16) gesondert ausgebildete Vertikalabdeckung (48) als einer, gegebenenfalls weiteren, Abdeckung bedeckt ist.

## Claims

1. Tooling machine (10), preferably for the machining of a workpiece by a tool, with at least one translational movement device (18, 26) for displacing the tool and the workpiece in relation to each other along a movement axis (X, Y), said movement device (18, 26) comprising a basic structure (22, 28), a movement portion (20, 30) which can be displaced along said movement axis (X, Y) in relation to the basic structure (22, 28), a linear guiding device (24) extending along said movement axis (X, Y) and guiding the movement portion (20, 30) for movement and a motion drive driving said movement portion (20, 30) for movement, wherein said linear guiding device (24) and said motion drive are covered by a cover (34, 47) which is formed separately from the movement portion (20, 30) to protect the latter against exterior influences, such as chippings or/and splashes of lubricant or/and splashes of cooling agent, wherein said cover (34, 47) extends in the direction of said movement axis (X, Y) at least across substantially the entire length of said linear guiding device (24) and is in terms of operation, in particular during movement operation of the movement portion (20, 30) according to its intended use, rigidly fixed in relation to the basic structure (22, 28),
**characterized in that** an inner side (34b1) of said cover (34), facing towards the basic structure (22, 28), is supported at a section of said movement portion (20, 30).

2. Tooling machine (10) according to claim 1,
**characterized in that** said movement portion (20, 30) comprises a guiding portion (40) which is preferably completely entirely provided below the cover (34), wherein the cover (34) is supported at the guiding portion (40) of said movement portion (20, 30).

3. Tooling machine (10) according to one of claims 1 or 2,
**characterized in that** a portion of said movement portion (20, 30) supporting said cover (34), in particular said guiding portion (40), is provided with support means (60, 62) abutting slidingly or/and shiftingly at the inner side (34b1) of the cover (34),
wherein, in particular at the portion of said movement portion (20, 30) supporting said cover (34), a support portion (64) abutting slidingly at the inner side (34b1) of the cover (34) is provided, which is especially made of self-lubricating plastics, such as polytetrafluorethylene or of a plastics with graphite contents.

4. Tooling machine (10) according to one of claims 2 or 3,
**characterized in that** said support means (60, 62) of said movement portion (20, 30) comprise at least one support rolling element (66), for example a support wheel, preferably a plurality of support rolling elements (66), such as for example support wheels or support rollers, which during an axial movement of said movement portion (20, 30) roll at the inner side (34b1) of the cover, wherein in particular a plurality of support rolling elements (66) is combined in a support arrangement (62) with rolling axes which are orthogonal to the movement axis (X), said rolling axes of the single support rolling elements being preferably arranged in a common plane orthogonal to the movement axis (X).

5. Tooling machine (10) according to one of claims 2 to 4,
**characterized by** one support means (60, 62) being provided at each longitudinal end of said portion of the movement portion (20, 30) supporting the cover (34), in particular of the guiding portion (40).

6. Tooling machine according to one of the preceding claims,
**characterized in that** said movement portion (20, 30) embraces the cover (34, 47), independently of its position along said movement axis (X, Y), in the circumferential direction about said movement axis (X, Y) forming a receiving gap (44) between said movement portion (20, 30) and the cover (34, 47) which is substantially orthogonal to said movement axis (X, Y), in at least one of its longitudinal edges (34c1, 34d1) extending in the direction of said movement axis (X, Y), preferably at both longitudinal edges (34c1, 34d1), and preferably surrounds said cover (34, 47) entirely.

7. Tooling machine (10) according to one of the preceding claims,
**characterized in that** said cover (34, 47) comprises a cover leg portion (34b) spanning said linear guiding device (24) and at least one border leg portion (34c, 34d) projecting with a direction component towards the basic structure (22, 28), said border leg portion (34c, 34d) comprising at its end opposite the cover leg portion (34b) a free longitudinal border (34c1, 34d1) extending towards said movement axis (X, Y), said cover (34, 47) comprising with particular preference two border leg portions (34c, 34d) projecting with a direction component towards the basic structure (22, 28), said cover leg portion (34b) being provided between said border leg portions (34c, 34d), wherein, in particular at the basic structure (22, 28), a skirting arrangement (52) is provided, extending towards said movement axis (X, Y) and with a component towards said cover leg portion (34b), directly adjacent to a border leg portion (34c, 34d) in a direction orthogonal to said movement axis (X, Y) and with a gap (50) formed between said border leg portion (34c, 34d) and the skirting arrangement (52), through which a movement portion section passes and which is covered by said cover leg portion (34b), said skirting arrangement (52) and the border leg portion (34c, 34d) arranged immediately next to it overlapping in a direction (u) orthogonal to the movement axis, wherein in particular said cover (34, 47) comprises two border leg portions (34c, 34d) with a cover leg portion (34b) arranged in between, and wherein a skirting arrangement (52) is provided at the basic structure (22, 28) directly adjacent to each border leg portion (34c, 34d) in a direction orthogonal to said movement axis (X, Y), extending in a direction of the movement axis (X, Y) and with a component towards said cover leg portion (34b), the latter being arranged in a direction orthogonal to said movement axis (X, Y) with a gap (50) formed between said skirting arrangement (52) and the directly adjacent border leg portion (34c, 34d), with a movement portion section passing through both gaps (50) and said cover leg portion (34b) covering them, with each skirting arrangement (52) and the directly adjacent border leg portion (34c, 34d) overlapping in a direction (X, Y) orthogonal to said movement axis.

8. Tooling machine (10) according to claim 7,
**characterized in that** said cover leg portion (34b) is curved about an axis of curvature parallel to said movement axis (X, Y), preferably convex-shaped when said tooling machine (10) is seen from the outside, or/and that said cover leg portion (34b) is bent about a bending axis parallel to said movement axis (X, Y), preferably forming a convex structure when said tooling machine (10) is seen from the outside.

9. Tooling machine (10) according to one of the preceding claims,
**characterized in that** said cover (34, 47) is connected to the basic structure (22, 28) only in its axial longitudinal end sections.

10. Tooling machine (10) according to one of the preceding claims,
**characterized in that** at least one component forming, over the entire length of said cover (34, 47), an outer side (34a) of the cover (34, 47) extending away from the linear guiding device (24), preferably the entire cover (34, 47), is designed in one piece.

11. Tooling machine (10) according to one of claims 1 or 9,
**characterized in that** said cover (34, 47) consists of many parts, i.e. of several separated cover components forming at least one joining gap between two adjacent cover components, preferably in a plane which is orthogonal to said movement axis (X, Y), wherein in particular between an outer side (34a) of the cover (34) facing away from the basic structure (22, 28) and said movement portion (20, 30) independent of the position of said movement portion (20, 30) along said movement axis (X, Y), a receiving gap (44) is formed substantially orthogonal to said movement axis (X, Y) and it is bridged by two sealing structures arranged at said movement portion (20, 30) with a distance (L) in the movement direction, the latter abutting in a displaceable manner at the outer side (34a) of the cover (34, 47) wherein preferably the axial distance (L) of the sealing structures is bigger than the defined maximum axial movement path (W) of said movement portion (20, 30) in relation to said basic structure (22, 28) so that even when the defined maximum axial movement path (W) is used, an axial dead zone (45) of the cover (34, 47) will occur, which cannot be bridged by a sealing structure, wherein the at least one joining gap is arranged in the axial dead zone (45).

12. Tooling machine (10) according to one of the preceding claims,
**characterized in that** said movement portion (20, 30) is adapted on its usable side (20a) opposite the basic structure (22, 28) for receiving a workpiece, for example a clamping device or/and a plurality of T-grooves.

13. Tooling machine (10) according to one of the preceding claims,
**characterized in that** as a first movement device (18, 26) it comprises a translational positioning device (18) for displacing the tool and the workpiece in relation to each other along a positioning axis (X) as a first movement axis (X, Y), said positioning device (18) comprising a support structure (22) as a first basic structure (22, 28), a positioning portion (20) moveable along said positioning axis (X) in relation to the support structure (22) as a first movement portion (20, 30), a first linear guiding device (24) extending along said positioning axis (X) and guiding the positioning portion (20) for its positioning movement, and a positioning drive driving said positioning portion (20) for a positioning movement as a first movement drive, said first linear guiding device (24) and said positioning drive being covered by a cover (34) which is formed separately from the positioning portion (20) to protect the latter against exterior influences, the cover extending in the direction of said positioning axis (X), at least over approximately the entire length of said first linear guiding device (24) and which is operatively rigidly fixed at the support structure (22), in particular during a defined positioning operation of said positioning portion (20), and **in that** it comprises additionally to the translational positioning device (18) a translational displacement device (26) as a second movement device (18, 26) for displacing tool and workpiece in relation to each other along a displacement axis (Y) as a second movement axis (X,Y) whose direction is different from said positioning axis (X), wherein said displacement device (26) comprises a support structure (28) as a second basic structure (22, 28), a displacement portion (30) which can be moved along said displacement axis (Y) in relation to the support structure (28) as a second movement portion (20, 30), a second linear guiding device extending along said displacement axis (Y) and guiding said displacement portion (30) for a displacement movement, and a displacement drive as a second movement drive, driving said displacement portion (30) for a displacement movement, said second linear guiding device and said displacement drive being covered by a cover (47) which is formed separately from the displacement portion (30) to protect the latter against exterior influences, the cover extending in the direction of said displacement axis (Y) at least over the entire length of said second linear guiding device and which is operatively rigidly fixed at the support structure (28), in particular during a defined displacement operation of said displacement portion (30), wherein especially said support structure (22) of said positioning device (18) is part of said displacement portion (30) of said displacement device (26), wherein positioning device (18) and displacement device (26) preferably form a cross table device (49).

14. Tooling machine (10) according to one of the preceding claims,
**characterized in that** the basic structure (22, 28), in particular the support structure (28) is a mounted or integral part of a machine base (12) of the tooling machine (10).

15. Tooling machine (10) according to one of the preceding claims,
**characterized in that** it comprises a translational vertical adjustment device (14) possibly as a further movement device for adjusting tool and workpiece in relation to each other along a substantially vertical, particularly preferred a vertical axis (Z), possibly as a further movement axis, said vertical adjustment device (14) comprising a general structure (12), possibly as a further basic structure, an adjustment portion (16) moveable along said vertical axis (Z) in relation to the general structure (12), possibly as a further movement portion, a guiding device extending along said vertical axis (Z) and guiding the adjustment portion (16) for its adjusting movement, possibly as a further linear guiding device, and an adjustment drive driving said adjustment portion (16) for its adjusting movement, possibly as a further movement drive, said guiding device and said adjustment drive being covered by a vertical cover (48), which is formed separately from the adjustment portion (16), possibly as a further cover, to protect against exterior influences.

## Revendications

1. Machine-outil (10), de préférence pour le travail avec formation de copeaux d'une pièce à travailler par un outil avec au moins un dispositif de mouvement de translation (18, 26) pour déplacer l'outil et la pièce à travailler l'un par rapport à l'autre le long d'un axe de mouvement (X, Y), le dispositif de mouvement (18, 26) comprenant une structure de base (22, 28), une partie de mouvement (20, 30) mobile le long de l'axe de mouvement (X, Y) par rapport à la structure de base (22, 28), un dispositif de guidage linéaire (24) s'étendant le long de l'axe de mouvement (X, Y) et guidant la partie de mouvement (20, 30) au mouvement, et un entraînement au mouvement entraînant la partie de mouvement (20, 30) au mouvement, le dispositif de guidage linéaire (24) et l'entraînement au mouvement étant couverts par une couverture (34, 47) formée de manière séparée de la partie de mouvement (20, 30) comme protection contre des influences extérieures, comme par exemple la formation de copeaux ou/et des éclaboussures de lubrifiant ou de réfrigérant,
la couverture (34, 47) s'étendant dans la direction de l'axe de mouvement (X, Y), au moins essentiellement par-dessus la longueur entière du dispositif de guidage linéaire (24) et étant, en opération, fixé, de manière immobile par rapport à la structure de base (22, 28), en particulier pendant une opération de mouvement conforme de la partie de mouvement (20, 30),
**caractérisée en ce qu'une** face interne (34b1) de la couverture (34) orientée vers la structure de base (22, 28) est supporté à une section de la partie de mouvement (20, 30).

2. Machine-outil (10) selon la revendication 1,
**caractérisée par** la partie de mouvement (20, 30) comprenant une partie de guidage (40) prévue principalement, de préférence entièrement, en dessous de la couverture (34), la couverture (34) étant supportée à la partie de guidage (40) de la partie de mouvement (20, 30).

3. Machine-outil (10) selon une des revendications 1 ou 2,
**caractérisée par** une section de la partie de mouvement (20, 30) supportant la couverture (34), en particulier la partie de guidage (40), étant prévue avec des moyens de support (60, 62) s'appliquant de manière déplaçable ou/et de manière mouvante contre la face intérieure (34b1) de la couverture (34), où, une partie de support (64), s'appliquant de manière déplaçable contre la face intérieure (34b1) de la couverture (34), est en particulier prévue à la section de la partie de mouvement (20, 30) supportant la couverture (34), qui est en particulier formée en plastique autolubrifiant, comme par exemple polytetrafluoroéthylène, ou en plastique avec un pourcentage de graphite.

4. Machine-outil (10) selon une des revendications 2 ou 3,
**caractérisée par** les moyens de support (60, 62) de la partie de mouvement (20, 30) comprenant au moins un corps roulant de support (66), par exemple une roue de support, de préférence une pluralité de corps roulant de support (66), par exemple des roue d'appui ou des rouleaux de support, qui, lors d'un mouvement axial de la partie de mouvement (20, 30) déroulent à la face intérieure (34b1) de la couverture (34),
où en particulier une pluralité de corps roulant de support (66) est combinée sous forme d'un arrangement de support (62) avec des axes de roulement orthogonaux à l'axe de mouvement (X), les axes de roulement des corps roulant de support étant de préférence arrangés dans un plan commun qui est orthogonal à l'axe de mouvement (X).

5. Machine-outil (10) selon une des revendications 2 à 4,
**caractérisée par** un moyen de support (60, 62) étant prévu à chaque extrémité longitudinale de la section de la partie de mouvement (20, 30) supportant la couverture (34), en particulier de la partie de guidage (40).

6. Machine-outil (10) selon une des revendications précédentes,
**caractérisée en ce que** la partie de mouvement (20, 30) engage indépendamment de sa position le long de l'axe de mouvement (X, Y) la couverture (34, 47) dans la direction circonférentielle autour de l'axe de mouvement (X, Y) en formant un interstice de réception (44) essentiellement orthogonal à l'axe de mouvement (X, Y) entre la partie de mouvement (20, 30) et la couverture (34, 47), à au moins un de ses bords longitudinaux (34c1, 34d1) le long de l'axe de mouvement (X, Y), de préférence à ses deux bords longitudinaux (34c1, 34d1) ou de préférence entoure entièrement la couverture (34, 47).

7. Machine-outil (10) selon une des revendications précédentes,
**caractérisée en ce que** la couverture (34, 47) comprend une section de branche de couverture (34b) enjambant le dispositif de guidage linéaire (24) et au moins une section de branche de bord (34c, 34d) projetant avec un composant directionnel vers la structure de base (22, 28), la section de branche de bord (34c, 34d) comprenant à son extrémité opposée à la section de branche de couverture (34b) un bord longitudinal (34c1, 34d1) libre s'étendant en direction de l'axe de mouvement (X, Y), la couverture (34, 47) comprenant de manière particulièrement préférée deux sections de branche de bord (34c, 34d) projetant avec un composant directionnel vers la structure de base (22, 28), ladite section de branche de couverture (34b) étant prévue entre les sections de branche de bord (34c, 34d),
où un arrangement de jupes (52) s'étendant vers l'axe de mouvement (X, Y) et avec un composant envers la section de branche de couverture (34b) est en particulier prévu à la structure de base (22, 28), arrangé directement adjacent à une section de branche de bord (34c, 34d) dans une direction orthogonale à l'axe de mouvement (X, Y) et avec un interstice (50) formé entre la section de branche de bord (34c, 34d) et l'arrangement de jupes (52), à travers laquelle passe une portion de la partie de mouvement et qui est couvert par la section de branche de couverture (34b), l'arrangement de jupes (52) et la section de branche de bord (34c, 34d) immédiatement adjacente se chevauchant dans une direction (u) orthogonale à l'axe de mouvement,
où la couverture (34, 47) comprend en particulier deux sections de branche de bord (34c, 34d) avec une section de branche de couverture (34b) arrangée entre les deux, et où un arrangement de jupes (52) est prévu à la structure de base (22, 28), directement adjacent à chaque section de branche de bord (34c, 34d) dans une direction orthogonale à l'axe de mouvement (X, Y), s'étendant dans la direction de l'axe de mouvement (X, Y) avec un composant envers la section de branche de couverture (34b), cet arrangement étant dans une direction orthogonale à l'axe de mouvement (X, Y) arrangé avec un interstice (50) formé entre l'arrangement de jupes (52) et la section de branche de bord (34c, 34d) directement adjacente, une portion de la partie de mouvement passant à travers les deux interstices (50) et ces derniers étant couverts par la section de branche de couverture (34b), chaque arrangement de jupes (52) et la section de branche de bord (34c, 34d) directement adjacente se chevauchant dans une direction (X, Y) orthogonale à l'axe de mouvement.

8. Machine-outil (10) selon une des revendications précédentes,
**caractérisée en ce que** la section de branche de couverture (34b) est courbée autour d'un axe de courbure parallèle à l'axe de mouvement (X, Y), de préférence courbé de manière convexe lorsque la machine-outil (10) est vue de l'extérieur, ou/et **en ce que** la section de branche de couverture (34b) est pliée autour d'un axe de pliage parallèle à l'axe de mouvement (X, Y), de préférence en formant une structure convexe lorsque la machine-outil (10) est vue de l'extérieur.

9. Machine-outil (10) selon une des revendications précédentes,
**caractérisée en ce que** la couverture (34, 47) est liée à la structure de base (22, 28) seulement à ses extrémités longitudinales axiales.

10. Machine-outil (10) selon une des revendications précédentes,
**caractérisée en ce qu'au** moins un composant formant sur la longueur entière de la couverture (34, 47) un côté extérieur (34a) de la couverture (34, 47) opposé au dispositif de guidage linéaire (24), de préférence la couverture (34, 47) entière, est adapté en une pièce.

11. Machine-outil (10) selon une des revendications 1 à 9,
**caractérisée en ce que** la couverture (34, 47) est formée en plusieurs pièces de plusieurs composants de couverture séparés, en formant au moins un interstice de jointure entre deux composants de couverture adjacents, de préférence dans un plan orthogonal à l'axe de mouvement (X, Y),
un interstice de réception (44) qui est essentiellement orthogonal à l'axe de mouvement (X, Y) étant formée en particulier entre un côté extérieur (34a) de la couverture (34) opposé à la structure de base (22, 28) et la partie de mouvement (20, 30), indépendamment de la position de la partie de mouvement (20, 30) le long de l'axe de mouvement (X, Y), l'interstice étant ponté par deux structures d'étanchéité arrangées avec une distance (L) dans la direction de l'axe de mouvement à la partie de mouvement (20, 30) et qui sont en appuie de manière déplaçable au côté extérieur (34a) de la couverture (34, 47), la distance axiale (L) des structures d'étanchéité étant de préférence plus grande que le trajet de déplacement (W) axial maximal défini de la partie de mouvement (20, 30) par rapport à la structure de base (22, 28) de sorte que, même en utilisant le trajet de déplacement (W) maximal axial défini, une zone morte axiale (45) de la couverture (34, 47) existe qui ne peut être ponté par aucune structure d'étanchéité, ledit au moins un interstice de jointure étant arrangé dans la zone morte axiale (45).

12. Machine-outil (10) selon une des revendications précédentes,
**caractérisée en ce que** la partie de mouvement (20, 30) est adaptée à son côté utile (20a) opposé à la structure de base (22, 28) pour recevoir une pièce à travailler, par exemple un dispositif de serrage ou/et une pluralité de rainures en T.

13. Machine-outil (10) selon une des revendications précédentes,
**caractérisée en ce qu'elle** comprend un dispositif de positionnement en translation (18) comme premier dispositif de mouvement (18, 26) pour déplacer l'outil et la pièce à travailler l'un par rapport à l'autre le long d'un axe de positionnement (X) comme premier axe de mouvement (X, Y), ledit dispositif de positionnement (18) comprenant une structure de support (22) comme première structure de base (22, 28), une partie de positionnement (20) mobile le long de l'axe de positionnement (X) par rapport à la structure de support (22) comme première partie de mouvement (20, 30), un premier dispositif de guidage linéaire (24) s'étendant le long de l'axe de positionnement (X) et guidant la partie de positionnement (20) pour son mouvement de positionnement, et un entraînement de positionnement entraînant la partie de positionnement (20) au mouvement de positionnement comme premier entraînement de mouvement, le premier dispositif de guidage linéaire (24) et l'entraînement de positionnement étant couverts par une première couverture (34) formée séparément de la partie de positionnement (20) pour la protection contre des influences extérieures et s'étendant en direction de l'axe de positionnement (X) au moins sur essentiellement la longueur entière du premier dispositif de guidage linéaire (24) et étant fixée de manière immobile à la structure de support (22), en particulier pendant une opération de positionnement prévue de la partie de positionnement (20), et **en ce qu'**elle comprend, en outre du dispositif de positionnement en translation (18) comme une deuxième partie de mouvement (18, 26) un dispositif de déplacement en translation (26) pour déplacer l'outil et la pièce à travailler l'un par rapport à l'autre le long d'un axe de déplacement (Y) comme un deuxième axe de mouvement (X, Y), dont la direction est différente de l'axe de positionnement (X), le dispositif de déplacement en translation (26) comprenant une structure de support (28) comme deuxième structure de base (22, 28), une partie de déplacement (30) mobile le long de l'axe de déplacement (Y) par rapport à la structure de support (28) comme deuxième partie de mouvement (20, 30), un deuxième dispositif de guidage linéaire s'étendant le long de l'axe de déplacement (Y) et guidant la partie de déplacement (30) pour son mouvement de déplacement, et un entraînement de déplacement entraînant la partie de déplacement (30) au mouvement de déplacement comme deuxième entraînement de mouvement, le deuxième dispositif de guidage linéaire et l'entraînement de déplacement étant couverts par une deuxième couverture (47) formée de manière séparée de la partie de déplacement (30) comme protection contre des influences extérieures, s'étendant en direction de l'axe de déplacement (Y) sur au moins essentiellement la longueur entière du deuxième dispositif de guidage linéaire et étant fixés opérativement de manière immobile à la structure de support (28), en particulier pendant une opération de déplacement définie de la partie de déplacement (30),
où en particulier la structure de support (22) du dispositif de positionnement (18) fait partie de la partie de déplacement (30) du dispositif de déplacement (26), le dispositif de positionnement (18) et le dispositif de déplacement (26) formant de préférence un dispositif de table croisée (49).

14. Machine-outil (10) selon une des revendications précédentes,
**caractérisée en ce que** la structure de base (22, 28), en particulier la structure de support (28) est montée ou fait partie intégrante d'un bâti de machine (12) de la machine-outil (10).

15. Machine-outil (10) selon une des revendications précédentes,
**caractérisée en ce qu'elle** comprend un dispositif de réglage vertical de translation (14) comme, le cas échéant, dispositif de mouvement supplémentaire, pour ajuster l'outil et la pièce à travailler l'un par rapport à l'autre, le long d'un axe vertical (Z) principalement vertical, de préférence vertical, comme, le cas échéant, axe de mouvement supplémentaire, le dispositif de réglage vertical de translation (14) comprenant une structure de base (12) comme, le cas échéant, structure de base supplémentaire, un élément de réglage (16) mobile le long de l'axe vertical (Z) par rapport à la structure de base (12) comme, le cas échéant, partie de mouvement supplémentaire, un dispositif de guidage s'étendant le long de l'axe vertical (Z) et guidant l'élément de réglage (16) pour un mouvement d'ajustement, comme, le cas échéant, dispositif de guidage linéaire supplémentaire, et un entraînement de réglage entraînant l'élément de réglage (16) au mouvement de réglage, comme, le cas échéant, entraînement de mouvement supplémentaire, le dispositif de guidage et l'entraînement de réglage étant couverts par une couverture verticale (48) formée de manière séparée de l'élément de réglage (16) comme protection contre des influences extérieures comme, le cas échéant, couverture supplémentaire.
